# EUROPEAN PATENT APPLICATION

(11) **EP 1 628 207 A1**
(43) Date of publication of application: **22.02.2006**
(21) Application number: 04720237.9
(22) Date of filing: 12.03.2004
(51) Int. Cl.: G06F 9/06, G06F 9/445

(54) **INFORMATION PROCESSING DEVICE AND METHOD, PROGRAM RECORDING MEDIUM, PROGRAM, AND IMAGING DEVICE**

(30) Priority: 26.05.2003 JP 2003147187
(71) Applicant: SONY CORPORATION, Tokyo 141-0001 (JP)
(72) Inventor: Matsuno, Katsumi, c/o Sony Corporation,, Tokyo 141-0001 (JP)
(74) Representative: Robinson, Nigel Alexander Julian
(86) International application number: PCT/JP2004/003348
(87) International publication number: WO 2004/104821

(57) **Abstract**

The present invention relates to an information processing device and method, a program recording medium, a program, and an imaging device which enable different processing to be set easily and flexibly for different contents to be managed. An entry i in a content management file includes a pointer to a content i, that is, information indicating the location of the content i recorded on a recording medium 2, attribute information including recording date and time, modification date and time, or protection information, a thumbnail image of the content i, text information, a reproduction starting script 81 which is activated, when reproduction of the content i is instructed in accordance with an input made by a user from an operation section, before reproduction of the content i is started, and a reproduction ending script 82 which is activated when the reproduction of the content i ends. The present invention can be applied to an imaging device which records image data of an imaged object on a recording medium.

## Description

### Technical Field

The present invention relates to an information processing device and method, a program recording medium, a program, and an imaging device. More particularly, it relates to an information processing device and method, a program recording medium, a program, and an imaging device which enable different processing to be set flexibly for different contents to be managed.

### Background Art

There has been proposed, for example, as disclosed in Japanese Patent Laid-Open No. 2001-136480, a system in which information such as location information about recorded contents and the contents themselves is collectively managed in a database, and the database is made use of.

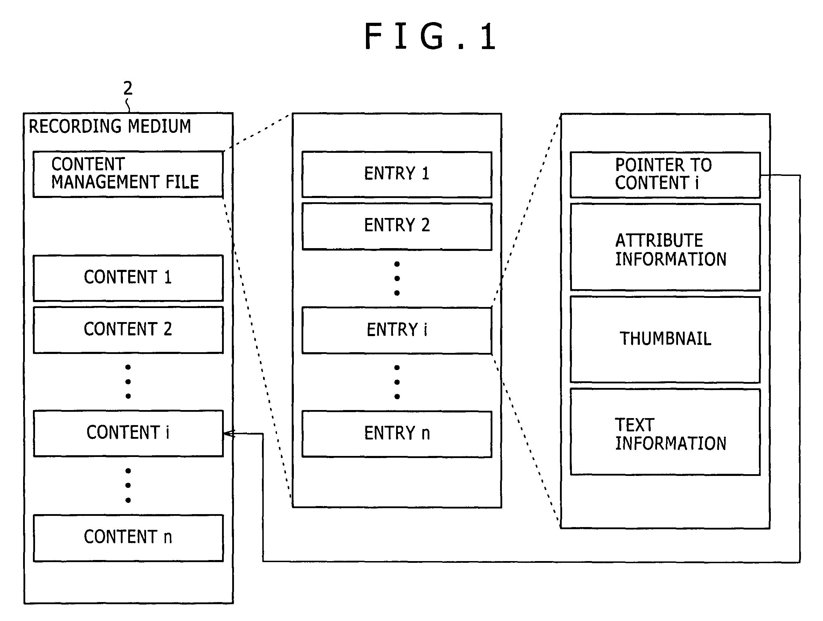

Figure 1 shows a configuration of a conventional content management file. In a case in which, as in the example configuration shown in Figure 1, plural contents ('n' contents) are recorded on a recording medium, as many corresponding entries ('n' entries) as the plural contents are generated and managed in the content management file.

An entry i in the content management file includes a pointer to a content i, that is, information indicating where the content i corresponding to the entry i is located, attribute information such as recording date and time, modification date and time, and protection information, a thumbnail image of the content i, and text information.

Even though the conventional content management file as described above can manage information about contents recorded on a recording medium, it cannot set and execute different processing for different contents managed in the content management file.

### Disclosure of the Invention

The present invention has been made in view of the above situation, and enables different processing to be set flexibly for different contents being managed.

A first information processing device according to the present invention is characterized in that it includes a generation means for generating a management file which manages contents recorded on a recording medium and a program registration means for registering, in the management file generated by the generation means, programs which control prescribed processing of the contents.

The first information processing device may also include an acquisition means for acquiring activation conditions for the programs registered, by the program registration means, in the management file, a determination means for determining whether or not the activation conditions acquired by the acquisition means are met, and an activation means for activating the programs based on determination made by the determination means.

An activation condition for a program may be inputting of an instruction to start processing a content, ending of the processing of the content, or meeting, during the processing of the content, of a preset prescribed condition.

The determination means may include a reproduction start determination means which determines whether or not starting reproduction of a content has been instructed. The activation means may activate a program when it is determined by the reproduction start determination means that starting reproduction of a content has been instructed. The program activated by the activation means may start reproducing the content from where reproduction of the content was previously ended.

The determination means may include a reproduction end determination means which determines whether or not a reproduction of a content has ended. The activation means may activate a program when it is determined by the reproduction end determination means that the reproduction of the content has ended. The program activated by the activation means may set the location where the reproduction of the content has ended.

The determination means may include a copying start determination means which determines whether or not copying of a content has been instructed. The activation means may activate a program when it is determined by the copying start determination means that copying of a content has been instructed. The program activated by the activation means may control the copying of the content based on copying management information about the content.

The determination means may include a recording end determination means which determines whether or not recording of a content has ended. The activation means may activate a program when it is determined by the recording end determination means that the recording of the content has ended. The program activated by the activation means may register recording information about the content in a server via a network.

The determination means may include a move start determination means which determines whether or not moving of a content has been instructed. The activation means may activate a program when it is determined by the move start determination means that moving of a content has been instructed. The program activated by the activation means may register destination information about the content in a server via a network and start moving the content.

The determination means may include a move end determination means which determines whether or not moving of a content has ended. The activation means may activate a program when it is determined by the move end determination means that the moving of the content has ended. The program activated by the activation means may delete move-from information about the content from a server via a network.

The determination means may include a reproduction start determination means which determines whether or not starting reproduction of a content has been instructed. The activation means may activate a program when it is determined by the reproduction start determination means that starting reproduction of a content has been instructed. The program activated by the activation means may set an activation condition for another program, which executes prescribed processing of the content while the content is being reproduced, and start reproducing the content.

The determination means may further includes an activation condition determination means which determines whether or not an activation condition for the another program is met. The activation means may activate the another program when the activation condition for the another program is met while the content is being reproduced. The another program activated by the activation means may control the reproduction of the content.

A first information processing method according to the present invention is characterized in that it includes a generation step of generating a management file which manages contents recorded on a recording medium and a program registration step of registering, in the management file generated by the generation step, programs which control prescribed processing of the contents.

A program recorded on a first program recording medium according to the present invention is characterized in that it includes a generation step of generating a management file which manages contents recorded on a recording medium and a program registration step of registering, in the management file generated by the generation step, programs which control prescribed processing of the contents.

A first program according to the present invention is characterized in that it makes a computer execute processing including a generation step of generating a management file which manages contents recorded on a recording medium and a program registration step of registering, in the management file generated by the generation step, programs which control prescribed processing of the contents.

A second information processing device according to the present invention is characterized in that it includes a generation means for generating a management file which manages contents recorded on a recording medium, a program registration means for registering programs which control prescribed processing of the contents, and a location information registration means for registering, in the management file generated by the generation means, location information indicating where the programs registered by the program registration means are located.

The second information processing device may further include an acquisition means for acquiring activation conditions for the programs registered by the program registration means, a determination means for determining whether or not the program activation conditions acquired by the acquisition means are met, and an activation means for activating the programs based on determination made by the determination means.

An activation condition for a program may be inputting of an instruction to start processing a content, ending of the processing of the content, or meeting, during the processing of the content, of a preset prescribed condition.

The determination means may include a reproduction start determination means which determines whether or not starting reproduction of a content has been instructed. The activation means may activate a program when it is determined by the reproduction start determination means that starting reproduction of a content has been instructed. The program activated by the activation means may start reproducing the content from where reproduction of the content was previously ended.

The determination means may include a reproduction end determination means which determines whether or not reproduction of a content has ended. The activation means may activate a program when it is determined by the reproduction end determination means that the reproduction of the content has ended. The program activated by the activation means may set the location where the reproduction of the content has ended.

The determination means may include a copying start determination means which determines whether or not copying of a content has been instructed. The activation means may activate a program when it is determined by the copying start determination means that copying of a content has been instructed. The program activated by the activation means may control the copying of the content based on copying management information about the content.

The determination means may include a recording end determination means which determines whether or not recording of a content has ended. The activation means may activate a program when it is determined by the recording end determination means that the recording of the content has ended. The program activated by the activation means may register recording information about the content in a server via a network.

The determination means may include a move start determination means which determines whether or not moving of a content has been instructed. The activation means may activate a program when it is determined by the move start determination means that moving of a content has been instructed. The program activated by the activation means may register destination information about the content in a server via a network and start moving the content.

The determination means may include a move end determination means which determines whether or not moving of a content has ended. The activation means may activate a program when it is determined by the move end determination means that the moving of the content has ended. The program activated by the activation means may delete move-from information about the content from a server via a network.

The determination means may include a reproduction start determination means which determines whether or not starting reproduction of a content has been instructed. The activation means may activate a program when it is determined by the reproduction start determination means that starting reproduction of a content has been instructed. The program activated by the activation means may set an activation condition for another program, which executes prescribed processing of the content while the content is being reproduced, and start reproducing the content.

The determination means may further include an activation condition determination means which determines whether or not an activation condition for the another program has been met. The activation means may activate the another program when the activation condition for the another program is met while the content is being reproduced. The another program activated by the activation means may control the reproduction of the content.

A second information processing method according to the present invention is characterized in that it includes a generation step of generating a management file which manages contents recorded on a recording medium, a program registration step of registering programs which control prescribed processing of the contents, and a location information registration step of registering, in the management file generated by the generation step, location information indicating where the programs registered by the program registration step are located.

A program recorded on a second program recording medium according to the present invention is characterized in that it includes a generation step of generating a management file which manages contents recorded on a recording medium, a program registration step of registering programs which control prescribed processing of the contents, and a location information registration step of registering, in the management file generated by the generation step, location information indicating where the programs registered by the program registration step are located.

A second program according to the present invention is characterized in that it makes a computer execute processing including a generation step of generating a management file which manages contents recorded on a recording medium, a program registration step of registering programs which control prescribed processing of the contents, and a location information registration step of registering, in the management file generated by the generation step, location information indicating where the programs registered by the program registration step are located.

A first imaging device according to the present invention is characterized in that it includes an imaging means for taking an image of an object, a recording means for recording image data of an object, an image of which has been taken by the imaging means, as content on a recording medium, a generation means for generating a management file which manages the content recorded by the recording means, and a program registration means for registering, in the management file generated by the generation means, programs which control prescribed processing of the content.

A second imaging device according to the present invention is characterized in that it includes an imaging means for taking an image of an object, a recording means for recording image data of an object, an image of which has been taken by the imaging means, as content on a recording medium, a generation means for generating a management file which manages the content recorded by the recording means, a program registration means for registering programs which control prescribed processing of the content, and a location information registration means for registering, in the management file generated by the generation means, location information indicating where the programs registered by the program registration means are located.

According to a first of the present invention, a management file which manages contents recorded on a recording medium is generated and programs which control prescribed processing of the contents are registered in the management file.

According to a second of the present invention, a management file which manages contents recorded on a recording medium is generated, programs which control prescribed processing of the contents is recorded, and location information indicating where the recorded programs are located is registered in the management file.

### Brief Description of Drawings

Figure 1 is a diagram showing an example configuration of a conventional content management file.
Figure 2 is a diagram showing an example configuration of a content management network system according to the present invention.
Figure 3 is a block diagram showing an example configuration of a server.
Figure 4 is a block diagram showing an example configuration of the imaging device shown in Figure 2.
Figure 5 is a diagram showing an example configuration of a content management file according to the present invention.
Figure 6 is a block diagram showing an example functional configuration of the imaging device shown in Figure 4.
Figure 7 is a flowchart describing script registration processing by the imaging device shown in Figure 6.
Figure 8 is a flowchart describing content management processing by the imaging device shown in Figure 6.
Figure 9 is a flowchart describing script monitoring processing performed in step S23 shown in Figure 8.
Figure 10 is a block diagram showing an example configuration of the activation condition monitoring section, shown in Figure 6, that executes the script monitoring processing shown in Figure 9.
Figure 11 is a flowchart describing reproduction starting processing performed in step S33 shown in Figure 9.
Figure 12 is a flowchart describing reproduction ending processing performed in step S36 shown in Figure 9.
Figure 13 is a diagram showing another example configuration of the content management file shown in Figure 5.
Figure 14 is a diagram showing still another example configuration of the content management file shown in Figure 5.
Figure 15 is a diagram showing an example configuration of the script file shown in Figure 14.
Figure 16 is a block diagram showing another example functional configuration of the imaging device shown in Figure 4.
Figure 17 is a flowchart describing script registration processing by the imaging device shown in Figure 16.
Figure 18 is a flowchart describing script monitoring processing by the imaging device shown in Figure 16.
Figure 19 is a flowchart describing script monitoring processing by the imaging device shown in Figure 16.
Figure 20 is a flowchart describing script monitoring processing by the imaging device shown in Figure 16.
Figure 21 is a block diagram showing an example configuration of the activation condition monitoring section, shown in Figure 16, that executes the script monitoring processing shown in Figures 18 to 20.
Figure 22 is a flowchart describing copying starting processing performed in step S129 shown in Figure 19.
Figure 23 is a flowchart describing recording ending processing performed in step S132 shown in Figure 19.
Figure 24 is a flowchart describing move starting processing performed in step S135 shown in Figure 20.
Figure 25 is a flowchart describing move ending processing performed in step S138 shown in Figure 20.
Figure 26 is a diagram showing another example configuration of the script shown in Figure 15.
Figure 27 is a flowchart describing content management processing by the imaging device shown in Figure 16.
Figure 28 is a diagram showing an example configuration of an activation condition table.
Figure 29 is a flowchart describing script monitoring processing performed in step S204 shown in Figure 27.
Figure 30 is a block diagram showing an example configuration of the activation condition monitoring section, shown in Figure 16, that executes the script monitoring processing shown in Figure 29.
Figure 31 is a flowchart describing reproduction starting processing performed in step S223 shown in Figure 29.
Figure 32 is a flowchart describing during-reproduction script monitoring processing performed in step S224 shown in Figure 29.
Figure 33 is a flowchart describing during-reproduction processing performed in step S254 shown in Figure 32.
Figure 34 is a flowchart describing another example of reproduction starting processing performed in step S223 shown in Figure 29.
Figure 35 is a flowchart describing another example of during-reproduction script monitoring processing performed in step S224 shown in Figure 29.
Figure 36 is a flowchart describing during-reproduction processing performed in step S284 shown in Figure 35.
Figure 37 is a flowchart describing another example of during-reproduction processing performed in step S284 shown in Figure 35.
Figure 38 is a diagram describing in detail an example of the processing shown in Figures 34 to37.
Figure 39 is a block diagram showing another example configuration of an imaging device according to the present invention.

### Best Mode for Carrying Out the Invention

With reference to the accompanying drawings, embodiments of the present invention will be described in the following.

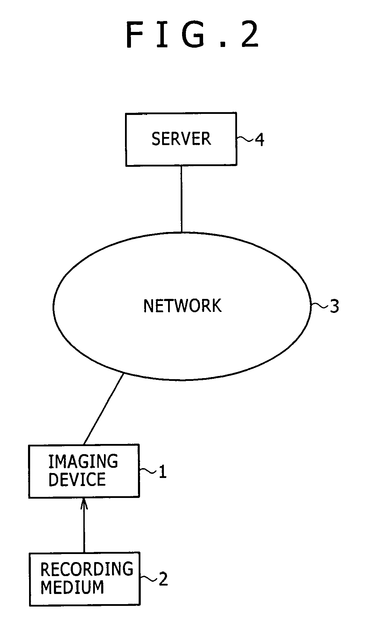

Figure 2 shows an example configuration of a content management network system (the "system" refers to a logical assembly of plural devices regardless of whether or not the plural devices are installed in a same housing) according to an embodiment of the present invention.

An imaging device 1 is designed to allow a recording medium 2 to be attached to and detached from it. The imaging device 1 records, as content, image data of a picked-up object and relevant audio data collected to the recording medium 2 loaded in the imaging device 1. The recording medium 2 may be a so-called memory card using a semiconductor memory, a recordable DVD (Digital Versatile Disk), or a CD (Compact Disc) which can store data. The present embodiment will be described based on the assumption that the recording medium 2 is a memory card.

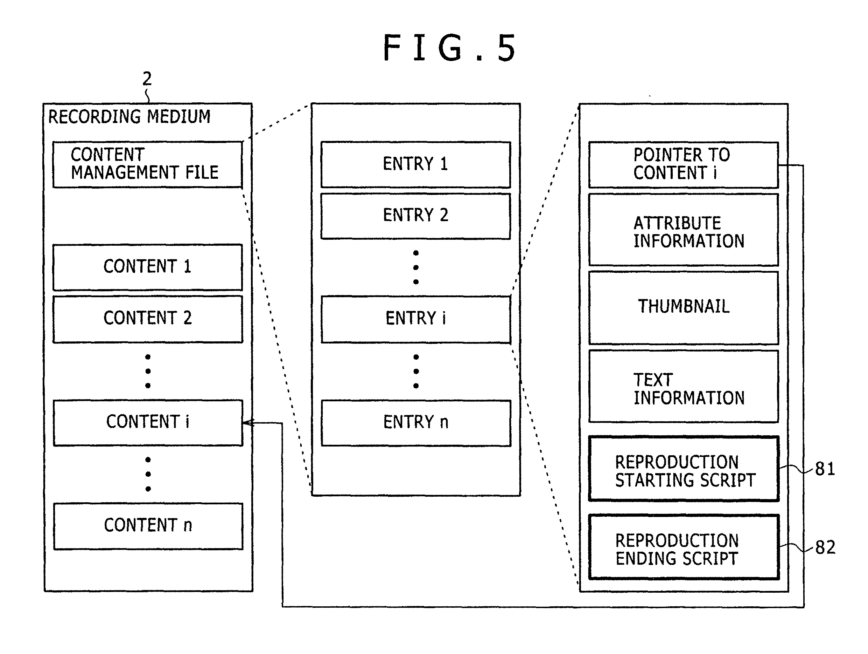

The imaging device 1, after recording a content on the recording medium 2, generates a content management file, being described later with reference to Figure 5, and registers an entry corresponding to the content recorded on the recording medium 2 in the content management file.

Furthermore, the imaging device 1 registers, in the entry in the content management file, scripts which are simplified programs for controlling such processing as content reproduction, transfer and recording. With such an arrangement made, when an instruction to process the content in a prescribed way is inputted by a user, a prescribed one of the scripts registered in the entry corresponding to the content is activated, and the activated script controls processing of the content.

Or, the imaging device 1 records the scripts on the recording medium 2 and registers pointers to the scripts recorded on the recording medium 2 in the entry in the content management file. With this arrangement made, when an instruction to process the content in a prescribed way is inputted by a user, a prescribed one of the scripts recorded on the recording medium 2 is activated based on the pointer to the script, the pointer having been registered in the entry corresponding to the content.

When the prescribed script registered in the entry is activated, the imaging device 1 transmits information about the content recorded on the recording medium 2 to a server 4 via a network 3 such as an internet or an intranet. As a result, the server 4 is enabled to centrally control the information about the content received via the network 3.

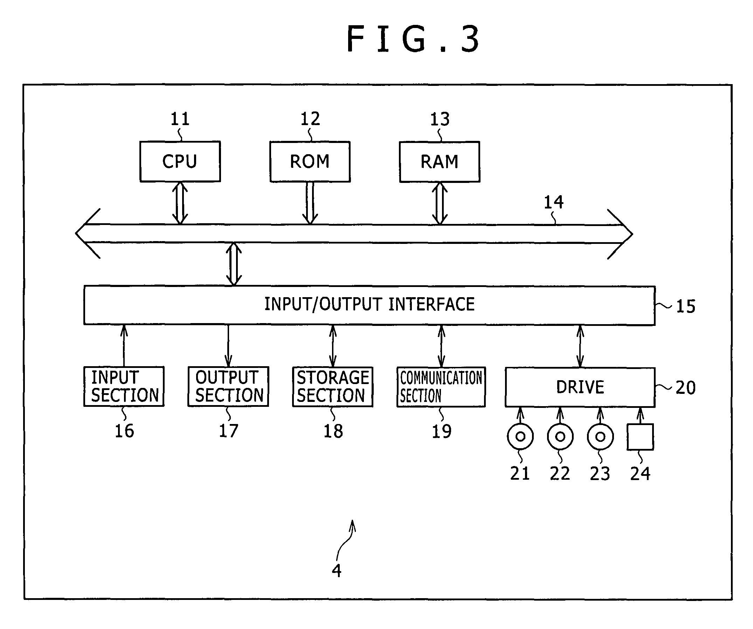

Figure 3 shows an example configuration of the server 4. In the example configuration shown in Figure 3, a CPU (Central Processing Unit) 11 executes various types of processing in accordance with programs stored in a ROM (Read Only Memory) 12 or programs loaded from a storage section 18 into a RAM (Random Access Memory) 13. Data needed by the CPU 11 in executing various types of processing is also stored as required in the RAM 13.

The CPU 11, ROM 12, and RAM 13 are interconnected via a bus 14. An input/output interface 15 is also connected to the bus 14.

An input section 16 including a keyboard and a mouse, a display including a CRT (Cathode Ray Tube) and/or an LCD (Liquid Crystal Display), an output section 17 including a speaker, a storage section 18 including a hard disk, and a communication section 19 including a modem and/or a terminal adapter are connected to the input/output interface 15. The communication section 19 performs communication processing via the network 3. The storage section 18 stores a database in which content information received, via the network 3, by the communication section 19 from the imaging device 1 is centrally controlled.

A drive 20 is connected as required to the input/output interface 15. A magnetic disk 21, an optical disc 22, a magneto-optical disk 23, or a semiconductor memory 24 is loaded in the drive 20 as required, and a computer program read out from the loaded medium is installed in the storage section 18 as required.

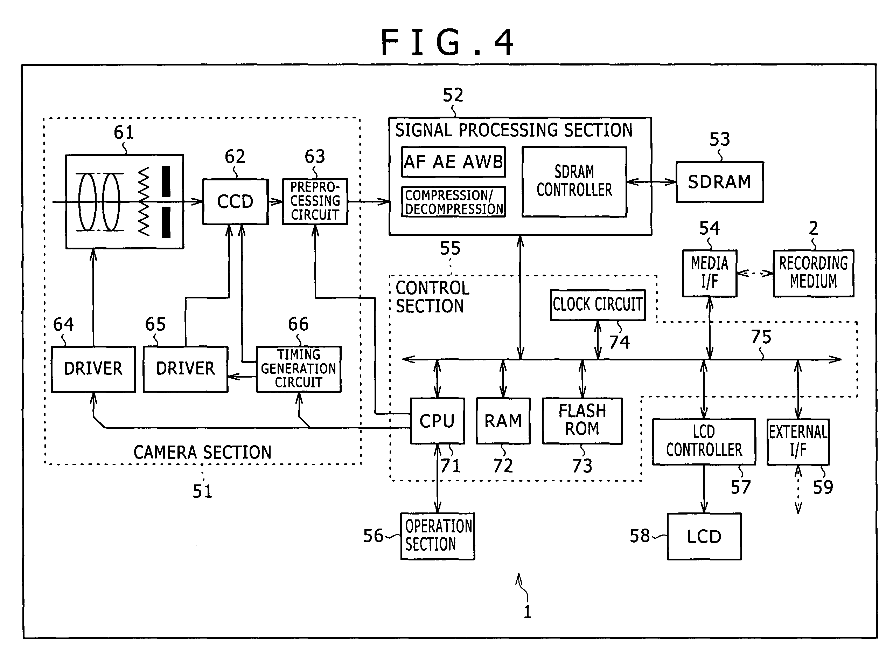

Figure 4 shows an example configuration of the imaging device 1. In the example configuration shown in Figure 4, the imaging device includes, broadly classified, a camera section 51, a signal processing section 52, an SDRAM (Synchronous Dynamic Random Access Memory) 53, a media interface (hereinafter referred to as the media I/F) 54, a control section 55, an operation section 56, an LCD (Liquid Crystal Display) controller 57, an LCD 58, and an external interface (hereinafter referred to as the external I/F) 59. The recording medium 2 can be attached to and detached from the media I\F 54. In the imaging device 1 shown in Figure 4, like image data, audio data is also received, subjected to prescribed signal processing, recorded as content on the recording medium 2, and outputted as sound from a speaker, not shown, but description and illustration of such audio data processing is omitted in Figure 4.

The camera section 51 includes an optical block 61 which includes a lens, a focusing mechanism, a shutter mechanism and an iris mechanism, a CCD (Charge Coupled Device) image pickup device 62 (hereinafter referred to simply as the CCD 62), a preprocessing circuit 63, an optical block driver 64, a CCD driver 65, and a timing generation circuit 66.

The control section 55 is a microcomputer, in which a CPU (Central Processing Unit) 71, an RAM (Random Access Memory) 72, a flash ROM (Read Only Memory) 73, and a clock circuit 74 are interconnected via a system bus 75 and which controls various sections of the imaging device 1. The RAM 72 is used mainly as a work area, for example, to temporarily store interim results of processing. The flash ROM 73 stores programs to be executed by the CPU 71 and data required for processing to be performed. The clock circuit 74 can supply such information as a current date, current day of the week, and current time. It supplies such information as a shooting date to the CPU 71.

In shooting an image, the optical block driver 64 forms, under the control of the control section 55, a drive signal for driving the optical block 61 and supplies the drive signal to the optical block 61 thereby causing the optical block 61 to operate. The optical block 61, in which the focusing mechanism, shutter mechanism and iris mechanism are controlled in accordance with the drive signal received from the optical block driver 64, takes an image of an object and supplies the image to the CCD 62.

The CCD 62 outputs the image received from the optical block 62 after subjecting it to photoelectric conversion. That is, the CCD 62, operating in response to a drive signal received from the CCD driver 65, takes in an object image transmitted from the optical block 61 and, based on a timing signal supplied by the timing generation circuit 66 being controlled by the control section 55, outputs the object image (image information) as an electrical signal to the preprocessing circuit 63. The timing generation circuit 66, under the control of the control section 55, forms a timing signal providing a prescribed timing. The CCD driver 65 forms a drive signal to be supplied to the CCD 62 in accordance with a timing signal received from the timing generation circuit 66.

The preprocessing circuit 63, while subjecting the image information received as an electrical signal to CDS (Correlated Double Sampling) processing so as to maintain a favorable S/N ratio, controls the signal gain by performing AGC (Automatic Gain Control) and forms digitized image data through A/D (Analog/Digital) conversion.

The image data outputted as a digital signal from the preprocessing circuit 63 is supplied to the signal processing section 52. The signal processing section 52 subjects the supplied image data to camera signal processing such as AF (Auto focusing), AE (Auto Exposure), and AWB (Auto White Balancing). The image data having been subjected to such camera signal processing is compressed by a prescribed method. It is then supplied, via the system bus 75 and the media I/F 54, to the recording medium 2 loaded in the imaging device 1 and recorded as content on the recording medium 2.

When the content is recorded on the recording medium 2, the CPU 71 generates a content management file on the recording medium 2 and registers an entry corresponding to the content in the content management file. The CPU 71 registers various scripts, which are simplified programs for controlling content processing such as reproduction, transfer and recording, in the entry registered in the content management file. The scripts may be stored in the flash ROM 73 beforehand, or they may be distributed using an appropriate recording medium or via the network 3 such as the Internet.

Figure 5 shows an example configuration of a content management file generated on the recording medium 2.

In the example configuration shown in Figure 5, the content management file and contents 1, 2, ..., i, ···, n (1 ≤ i ≤ n) are recorded on the recording medium 2. The content management file includes entries 1 to n corresponding to the contents 1 to n recorded on the recording medium 2. Entry i included in the content management file includes a pointer to "content i", that is, information indicating where the content i is located on the recording medium 2, attribute information including date of recording, date of modification, protection information about the content i, and management information about the content i used in the server 4, a thumbnail image of the content i, text information, a reproduction starting script 81, and a reproduction ending script 82.

The reproduction starting script 81 is a script which is activated, when reproduction of the content i is instructed in accordance with an input made by the user from the operation section 56 that includes, for example, a touch panel and control keys, before reproduction of the content i is started. The reproduction ending script 82 is a script which is activated when the reproduction of the content i ends.

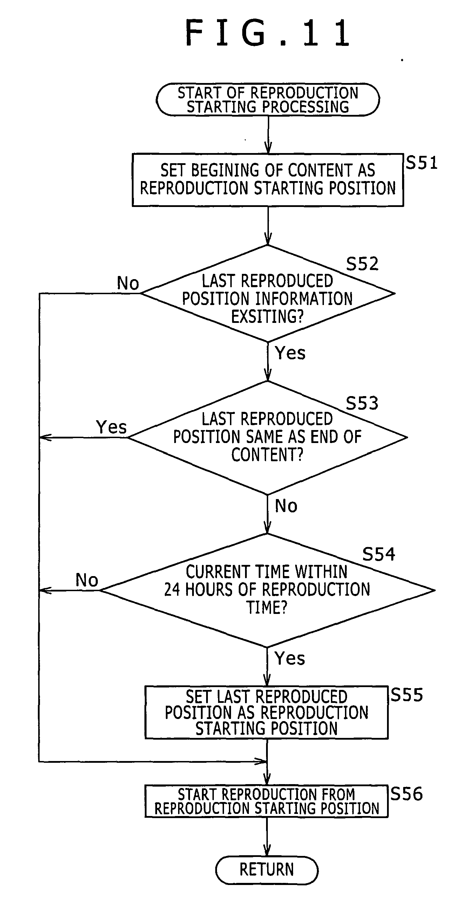

The CPU 71, when the content i is specified in accordance with an input made by the user, acquires conditions (that is, in the present example, 'when reproduction of the content i is to be started', or 'when reproduction of the content i ends') for activating various scripts registered in the entry i corresponding to the content i. When reproduction of the content i is instructed in accordance with an input made by the user, the CPU 71 activates the reproduction starting script 81 registered in the entry i. Namely, the CPU 71 executes reproduction starting processing, being described later with reference to Figure 11, in accordance with the reproduction starting script 81 read out from the recording medium 2 and loaded in the RAM 72.

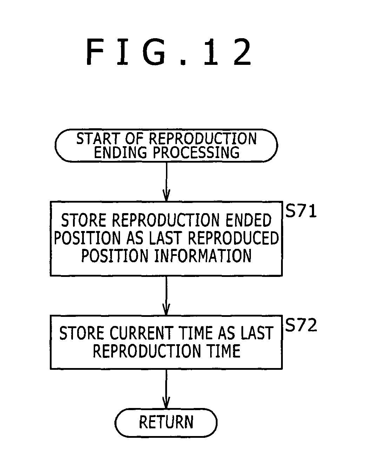

Similarly, when the reproduction of the content i ends, the CPU 71 activates the reproduction ending script 82 registered in the entry i. Namely, the CPU 71 executes reproduction ending processing, being described later with reference to Figure 12, in accordance with the reproduction ending script 82 read out from the recording medium 2 and loaded in the RAM 72.

Reverting to Figure 4, content image data recorded on the recording medium 2 is read out from the recording medium 2 via the media I/F 54 and supplied to the signal processing section 52, in accordance with an input made by the user from the control section 56 that includes, for example, a touch panel and control keys.

The signal processing section 52 decompresses the compressed image data read out from the recording medium 2 and supplied via the media I/F 54 and supplies the decompressed image data to the LCD controller 57 via the system bus 75. The LCD controller 57, using the supplied image data, forms an image signal and supplies the image signal to the LCD 58. As a result, an image corresponding to the image data recorded on the recording medium 2 is displayed on the screen of the LCD 58.

The imaging device 1 being provided with the external I/F 59 is connected, for example, to an external personal computer (not shown) via the external I/F 59. The imaging device 1 can then have image data supplied from the personal computer via the external I/F 59 and record the supplied image data on the recording medium 2 loaded in the imaging device 1. It can also supply image data recorded on the recording medium 2 to the external personal computer.

The imaging device 1 is connected to the network 3 that may be, for example, the Internet or an intranet. It can then acquire, via the network 3, various kinds of image data, information, and scripts from the server 4 connected to the network 3, and record them on the recording medium 2 loaded in the imaging device 1. Or, it can transmit, via the network 3, content information recorded on the recording medium 2 to the server 4 to have the content information centrally managed by the server 4.

The imaging device 1 can also read out and reproduce the image data and other information acquired via the network 3 or from the external personal computer and recorded on the recording medium 2, thereby displaying the image on the LCD 58 for the user to view. The external I/F 59 may be a wired interface complying with a standard such as IEEE (Institute of Electrical and Electronics Engineers) 1394 or USB (Universal Serial Bus). It may also be a wireless interface using light or radio waves. That is, the external I/F 59 may be either a wired interface or a wireless interface.

As described above, the imaging device 1 can take an image of an object, record the obtained image data as content on the recording medium 2 loaded in the imaging device 1, and have the recorded content managed in the content management file. It can also register prescribed scripts in the content management file. When, subsequently, processing of the content recorded on the recording medium 2 is instructed by a user operation, the imaging device 1 can activate a corresponding script, perform required processing using the script, and put the results of such processing in use.

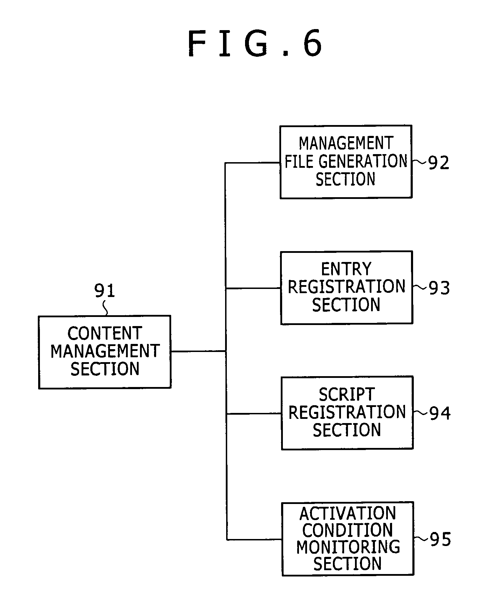

Figure 6 is a block diagram showing a functional configuration of the imaging device 1. The functional blocks shown in Figure 6 are realized by having prescribed control programs executed by the CPU 71 included in the imaging device 1.

The content management section 91 controls a management file generation section 92, an entry registration section 93, a script registration section 94, and an activation condition monitoring section 95 in accordance with inputs made by the user from the operation section 56 that includes a touch panel and control keys and based on entries registered in the content management file on the recording medium 2.

If, after completion of recording of a content, there is no content management file on the recording medium 2 (such a state occurs, for example, when a new recording medium is loaded or when a recording medium already loaded is initialized), the management file generation section 92 generates, under the control of the content management section 91, a content management file on the recording medium 2. If, after completion of recording of a content, there is no entry corresponding to the recorded content in the content management file on the recording medium 2 (such a state occurs, for example, when a new content is recorded), the entry registration section 93 generates, under the control of the content management section 91, an entry corresponding to the content in the content management file.

If, after completion of recording of a content, there is no script to control the content in the entry corresponding to the content (such a state occurs, for example, when a new content is recorded or when additional recording is made to a content recorded on a different device), the script registration section 94 registers, under the control of the content management section 91, a prescribed script stored in the flash ROM 73 in the entry corresponding to the content.

When a content is specified in accordance with an input made by the user, the activation condition monitoring section 95 acquires, under the control of the content management section 91, conditions for activating various scripts registered in the entry corresponding to the content and activates the scripts complying with the acquired conditions for activation.

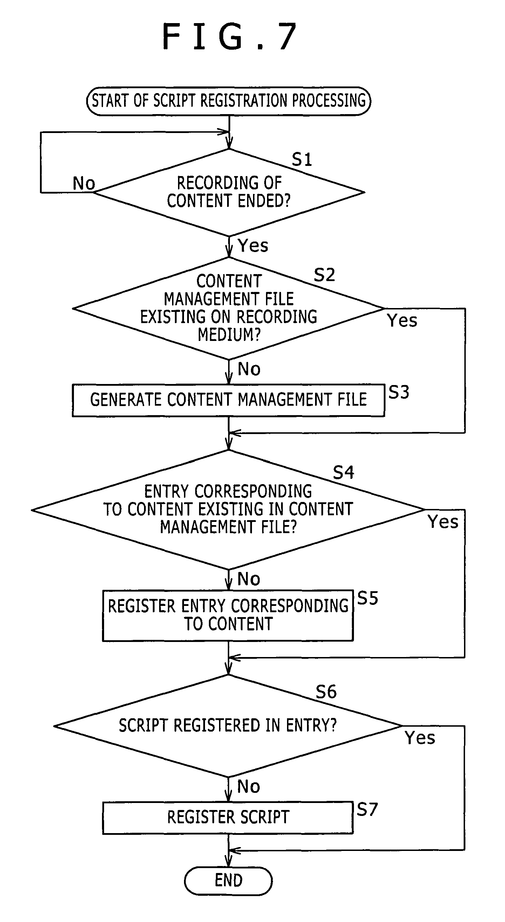

Next, with reference to the flowchart shown in Figure 7, script registration processing performed by the imaging device 1 shown in Figure 6 will be described.

For image shooting, the optical block driver 64 forms, under the control of the control section 55, a drive signal for driving the optical block 61 and supplies the drive signal to the optical block 61 thereby causing the optical block 61 to operate. The optical block 61, in which the focusing mechanism, shutter mechanism and iris mechanism are controlled in accordance with the drive signal received from the optical block driver 64, takes an image of an object and supplies the image to the CCD 62.

The CCD 62, operating in accordance with a drive signal received from the CCD driver 65, takes in the object image transmitted from the optical block 61 and, based on a timing signal from the timing generation circuit 66 that is controlled by the control section 55, supplies the object image (object image information) as an electrical signal to the preprocessing circuit 63.

The preprocessing circuit 63, while subjecting the image information received as an electrical signal to CDS (Correlated Double Sampling) processing so as to maintain a favorable S/N ratio, controls the gain of the signal by performing AGC (Automatic Gain Control), forms digitized image data through A/D (Analog/Digital) conversion, and supplies the digitized image data to the signal processing section 52.

The signal processing section 52 subjects the supplied image data to camera signal processing such as AF (Auto Focusing), AE (Auto Exposure), and AWB (Auto White Balancing). The image data having been subjected to such camera signal processing is compressed by a prescribed method. It is then supplied, via the system bus 75 and the media I/F 54, to the recording medium 2 loaded in the imaging device 1 and recorded as content on the recording medium 2.

The content management section 91, in step S1 shown in Figure 7, remains waiting until recording of the content to the recording medium 2 ends. When it is determined that recording of the content to the recording medium 2 has ended, the content management section 91 advances to step S2 to determine whether or not a content management file exists on the recording medium 2. There is no content management file on the recording medium 2, for example, when the recording medium 2 is a new medium, or when the recording medium 2 has been initialized. In such a case, the content management section 91, in step S2, determines that there is no content management file on the recording medium 2, and advances to step S3. In step 3, the content management section 91 generates a content management file on the recording medium 2 by controlling the management file generation section 92, and advances to step S4.

When it is determined in step S2 that there is a content management file on the recording medium 2, the content management section 91 advances to step S4, skipping step S3.

In step S4, the content management section 91 determines whether or not an entry corresponding to the content recorded on the recording medium 2 exists (is registered) in the content management file. When a new content is recorded on the recording medium 2, there is no entry corresponding to the newly recorded content in the content management file. In such a case, the content management section 91 determines in step S4 that, in the content management file, there is no entry corresponding to the content newly recorded on the recording medium 2, and advances to step S5. In step S5, the content management section 91 registers, in the content management file, an entry corresponding to the content newly recorded on the recording medium 2 by controlling the entry registration section 93, and advances to step S6.

When, in step S4, it is determined that an entry corresponding to the content recorded on the recording medium 2 exists in the content management file, the content management section 91 advances to step S6, skipping step S5.

The content management section 91 determines in step S6 whether or not prescribed scripts are registered in the entry corresponding to the content recorded on the recording medium 2. For example, when a new content is recorded on the recording medium 2, or when image data is added to a content recorded on a different device, there is no script registered in the entry corresponding to the content. In such a case, the content management section 91 determines in step S6 that there is no script registered in the entry corresponding to the content recorded on the recording medium 2, and advances to step S7. In step S7, the content management section 91 registers prescribed scripts (in the example shown in Figure 5, the reproduction starting script 81 and the reproduction ending script 82) stored in the flash ROM 73 in the entry corresponding to the content recorded on the recording medium 2 by controlling the script registration section 94 thereby ending the script registration processing.

When it is determined in step S6 that scripts are registered in the entry corresponding to the content recorded on the recording medium 2, the content management section 91 ends the script registration processing, skipping step S7.

As described above, in the imaging device 1, a content management file for managing a content recorded on the recording medium 2 is generated; an entry corresponding to the content recorded on the recording medium 2 is registered in the content management file; and prescribed scripts are registered in the entry corresponding to the content recorded on the recording medium 2.

Therefore, even in a case in which a new script distributed, for example, via the network 3 is to be additionally registered, the new script can be registered easily just by adding it to the corresponding entry.

The above script registration processing may be executed for every content recorded on the recording medium 2 in the imaging device 1. Or, an arrangement may be made such that the user can set an automatic registration function, for example, using a menu and such that the script registration processing is performed only for contents recorded in a state in which the automatic registration function has been set.

Even though, according to the above description, a content management file is generated after the content has been recorded, an arrangement may be made to automatically generate a content management file, for example, when the recording medium 2 including no content management file is loaded in the imaging device 1, or when the recording medium 2 is initialized. Also, according to the above description, prescribed scripts are registered when recording of a content ends. An arrangement may be made to allow the user to manually select a target content and required scripts and to cause the selected scripts to be registered in the entry corresponding to the selected content.

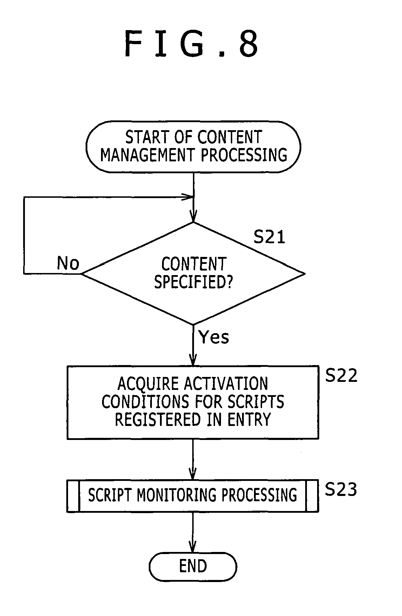

Next, with reference to the flowchart shown in Figure 8, content management processing performed by the imaging device 1 shown in Figure 6 to manage contents recorded on the recording medium 2 will be described. In the present example, the content management file is assumed to have a configuration as shown in Figure 5.

The user, to reproduce content i on the LCD 58, selects the content i recorded on the recording medium 2 by operating at the operation section 56 that includes a touch panel and control keys. The content management section 91, in step S21 shown in Figure 8, remains waiting until the content i is specified. When it is determined that the content i has been specified in accordance with an input made by the user from the operation section 56, the content management section 91 controls, in step S22, the activation condition monitoring section 95 to acquire conditions for activating scripts registered in entry i corresponding to the content i, and advances to step S23. That is, in the example shown in Figure 5, conditions for activating the reproduction starting script 81 and the reproduction ending script 82 are acquired in step S22.

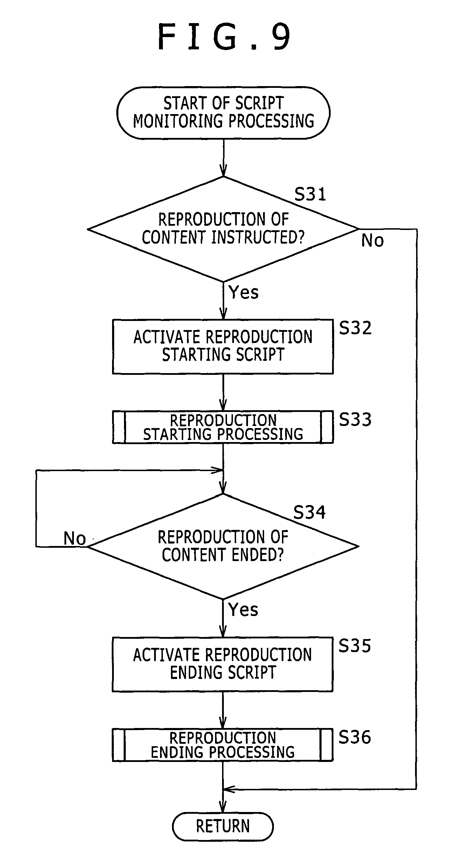

The activation condition monitoring section 95 executes, in step S23, script monitoring processing shown in Figure 9 in accordance with the acquired conditions for script activation. After the script monitoring processing ends, the content management section 91 ends the content management processing performed to manage contents recorded on the recording medium 2.

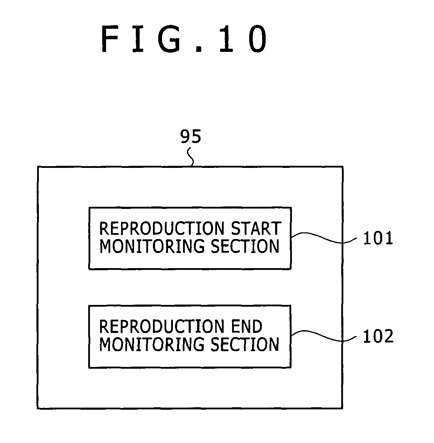

Next, with reference to the flowchart shown in Figure 9, the script monitoring processing performed in step S23 shown in Figure 8 will be described. The script monitoring processing shown in Figure 9 is processing performed by the activation condition monitoring section 95 shown in Figure 10.

Figure 10 is a functional block diagram of the activation condition monitoring section 95 that executes the script monitoring processing shown in Figure 9. In the example shown in Figure 10, the activation condition monitoring section 95 includes a reproduction start monitoring section 101 which monitors conditions for activating the reproduction starting script 81 and a reproduction end monitoring section 102 which monitors conditions for activating the reproduction ending script 82.

The reproduction start monitoring section 101 monitors whether or not reproduction of the content i has been instructed. When it is determined that reproduction of the content i has been instructed, the reproduction start monitoring section 101 activates the reproduction starting script 81 registered in the entry i. The reproduction end monitoring section 102 monitors whether or not reproduction of the content i has ended. When it is determined that the reproduction of the content i has ended, the reproduction end monitoring section 102 activates the reproduction ending script 82 registered in the entry i.

Therefore, in step S31 shown in Figure 9, the reproduction start monitoring section 101 determines, in accordance with an input made by the user from the operation section 56 that includes a touch panel and control keys, whether or not reproduction of the content i has been instructed. When it is determined that reproduction of the content i has been instructed, the reproduction start monitoring section 101 advances to step S32, and activates the reproduction starting script 81 registered in the entry i. The processing then advances to step S33. In step S33, the reproduction starting script 81 activated in step S32 executes the reproduction starting processing.

The reproduction starting processing will be described in the following with reference to the flowchart shown in Figure 11. The processing is, in reality, executed by the CPU 71 in accordance with the reproduction starting script 81 read out from the recording medium 2 and loaded in the RAM 72. In the following, however, the reproduction starting script 81 is regarded as what executes the processing, just for convenience of description. Similarly, in the following description of other processing made using scripts, the respective scripts will be regarded as what execute the respective processing.

The reproduction starting script 81 sets, in step S51 shown in Figure 11, the beginning of the content i as a reproduction starting position, and advances to step S52. In step S52, it determines whether or not information about the last reproduced position of the content i is stored in the flash ROM 73. The information about the last reproduced position indicates both the last reproduced position and the last reproduction time. It is information acquired when reproduction ending processing (being described later with reference to Figure 12) was executed last time and recorded in the flash ROM 73. When it is determined in step S52 that the information about the last reproduced position of the content i is stored in the flash ROM 73, the reproduction starting script 81 advances to step S53 and determines whether or not the last reproduced position given by the information about the last reproduced position stored in the flash ROM 73 is the end position of the content i. If it is determined that the last reproduced position given by the information stored in the flash ROM 73 is not the end position of the content i, the reproduction starting script 81 advances to step S54.

In step S54, the reproduction starting script 81 determines whether or not the current time known from the clock circuit 74 is within 24 hours of the last reproduction time included in the information about the last reproduced position stored in the flash ROM 73. If the current time is determined to be within 24 hours of the last reproduction time, the reproduction starting script 81 advances to step S55. In step S55, the reproduction starting script 81 sets the last reproduced position stored in the flash ROM 73 as the reproduction starting position, previously, in step S51, set to the beginning of the content. The reproduction starting script 81 then advances to step S56 and starts reproducing the content i from the reproduction starting position set as described above.

Thus, the image data at the reproduction starting position of the content i is read out from the recording medium 2 via the media I/F 54 and is then supplied to the signal processing section 52. The signal processing section 52 decompresses the compressed image data read out from the recording medium 2 and received via the media I/F 54, and supplies the decompressed image data to the LCD controller 57 via the system bus 75. The LCD controller 57 forms, using the image data thus supplied, an image signal and supplies the image signal to the LCD 58. As a result, an image corresponding to the image data recorded on the recording medium 2 is displayed, that is, reproduced, on the screen of the LCD 58. The processing then returns to step S34 shown in Figure 9.

If, on the other hand, it is determined in step S52 shown in Figure 11 that no information about the last reproduced position of the content i is stored in the flash ROM 73, the reproduction starting script 81 advances to step S56, skipping steps S53 through S55. When, in step S53, the last reproduced position given by the information about the last reproduced position stored in the flash ROM 73 is determined to be the end position of the content i, the reproduction starting script 81 advances to step S56, skipping steps S54 and S55. When it is determined in step S54 that the current time known from the clock circuit 74 is not within 24 hours of the last reproduction time known from the information about the last reproduced position stored in the flash ROM 73 (meaning that more than 24 hours passed since the last reproduction time), the reproduction starting script 81 advances to step S56, skipping step S55. Thus, in the following cases, the reproduction starting script 81 starts, in step S56, reproduction of the content i from the reproduction starting position (beginning of the content i) set in step S51, and then returns to step S34 shown in Figure 9: it is determined in step S52 that the information about the last reproduced position of the content i is not stored in the flash ROM 73; it is determined in step S53 that the last reproduced position known from the information about the last reproduced position of the content i stored in the flash ROM 73 is the end position of the content i; and it is determined in step S54 that the current time known from the clock circuit 74 is not within 24 hours of the last reproduction time known from the information about the last reproduced position of the content i stored in the flash ROM 73.

As, in step S33 shown in Figure 9, the reproduction starting script 81 executes the reproduction starting processing causing the content i to be reproduced, the reproduction end monitoring section 102 advances to step S34 and remains waiting until the reproduction of the content ends. When it is determined that the reproduction of the content has ended, the reproduction end monitoring section 102 activates the reproduction ending script 82 registered in the entry i, and advances to step S36. In step S36, the reproduction ending script 82 activated in step S35 executes the reproduction ending processing. The reproduction ending processing will be described in the following with reference to the flowchart shown in Figure 12.

In step S71 shown in Figure 12, the reproduction ending script 82 sets the reproduction ended position, that is the content position where the reproduction ended, as the information about the last reproduced position, stores the information in the flash ROM 73, and advances to step S72. In step S72, it sets the current time (time when the reproduction has ended) supplied by the clock circuit 74 as the last reproduction time and includes the time information in the information about the last reproduced position in the flash ROM 73. The information about the last reproduced position is to be used next time when the reproduction starting processing is executed for the content i. The reproduction end monitoring section 102 subsequently returns to the processing shown in Figure 9 to end the script activation processing. It then returns to the processing shown in Figure 8 causing the content management section 91 to end the processing for managing contents recorded on the recording medium 2.

If, on the other hand, it is determined in step S31 shown in Figure 9 that reproduction of the content i has not been instructed, the reproduction start monitoring section 101 ends, skipping steps S32 through S36, the script monitoring processing and returns to the processing shown in Figure 8 thereby causing the content management section 91 to end the processing for managing contents recorded on the recording medium 2.

As described above, the reproduction starting script 81, an activation condition for which is inputting of an instruction for starting reproduction of a content, and the reproduction ending script 82, an activation condition for which is ending of reproduction of a content, are registered in an entry in the content management file, the activation conditions for the scripts are monitored, and the scripts are activated when the corresponding activation conditions are met. Therefore, in a case in which information about the position where reproduction of a content ended last time is stored and in which reproduction of the same content is resumed within 24 hours, a time-limited resume-reproduction function to start reproduction of the content from the stored position can be realized. Even though, in the above description, the time limit for resuming reproduction of a content is set to 24 hours, it may be set differently. For example, it may be 12 hours to be shorter or 7 days to be longer than 24 hours.

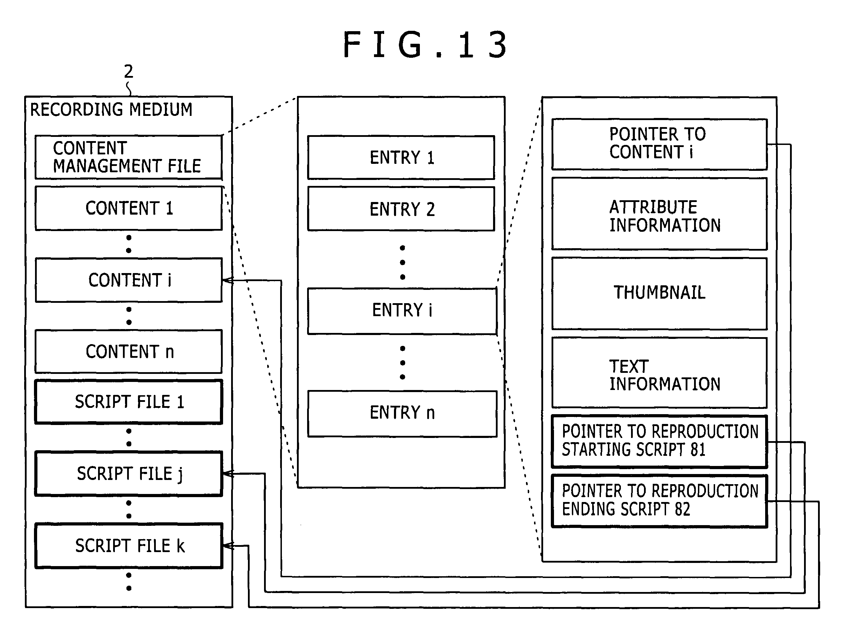

Figure 13 shows another example configuration of a content management file generated on the recording medium 2.

In the example configuration shown in Figure 13, a content management file and contents 1, 2, ···, i, ···, n (1 ≤ i ≤ n) are recorded on the recording medium 2 as in the example configuration shown in Figure 5. In addition to the content management file and the contents 1 to n, script files 1, ···, j, ···, k, ··· are also recorded on the recording medium 2. In the script file j, the reproduction starting script 81 described above with reference to Figure 5 is registered. In the script file k, the reproduction ending script 82 is registered.

The entry i included in the content management file includes, in addition to a pointer to the content i, attribute information, a thumbnail image of the content i, and text information, a pointer to the reproduction starting script 81 with the pointer being information indicating the position of the script j recorded on the recording medium 2, and a pointer to the reproduction ending script 82 with the pointer being information indicating the position of the script k recorded on the recording medium 2.

Therefore, when the content i is specified in accordance with an input made by the user from the operation section 56 that includes a touch panel and control keys, the CPU 71 acquires conditions for activating script files pointed to by pointers registered in the entry i corresponding to the content i (in the present example, conditions for activating script files j and k, that is, the reproduction starting script 81 and the reproduction ending script 82). When reproduction of the content i is instructed in accordance with an input made by the user, the CPU 71 activates the reproduction starting script 81 included in the script file j based on the pointer registered in the entry j and pointing to the reproduction starting script 81. When the reproduction of the content i ends, the CPU 71 activates the reproduction ending script 82 included in the script file k based on the pointer registered in the entry i and pointing to the reproduction ending script 82.

As described above, instead of registering scripts themselves in entries recorded in a content management file as in the example configuration shown in Figure 5, an arrangement may be made such that scripts are recorded (registered) as script files on the recording medium 2 and such that pointers to the script files recorded on the recording medium 2 are registered in entries included in the content management file, as in the example configuration shown in Figure 13. In this way, plural entries can share a same script, so that the capacity requirement for script files can be reduced.

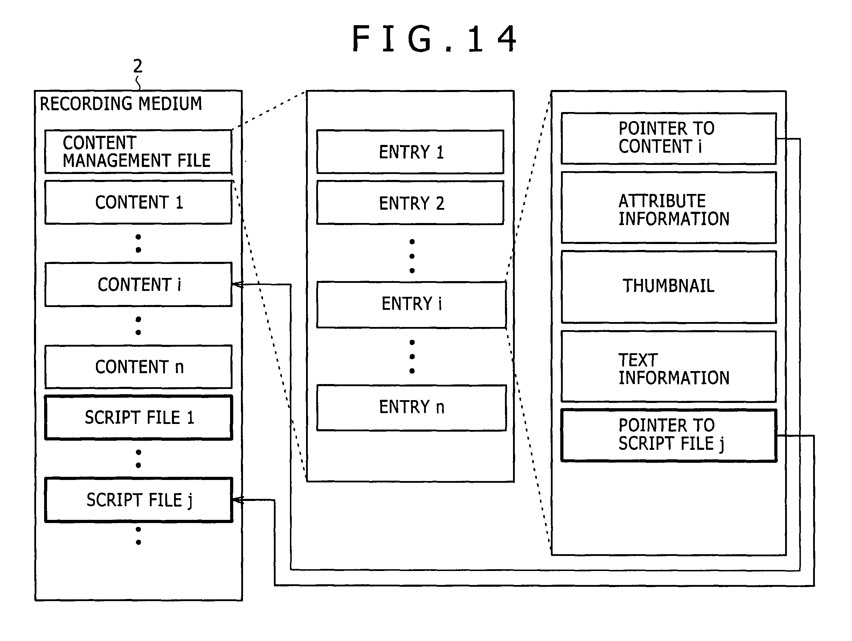

Figure 14 shows a still another example configuration of a content management file generated on the recording medium 2.

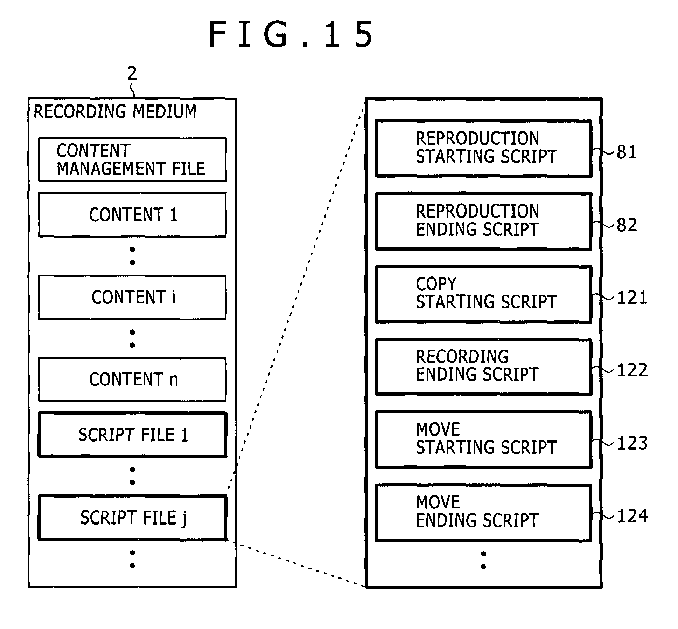

In the example configuration shown in Figure 14, a content management file, contents 1, 2, ···, i, ···, n (1 ≤ i ≤ n), and script files 1, ···, j, ··· are recorded on the recording medium 2 as in the example configuration shown in Figure 13. In the script file j, as shown in Figure 15, the reproduction starting script 81, the reproduction ending script 82, a copy starting script 121, a recording ending script 122, a move starting script 123, and a move ending script 124 are registered.

The copy starting script 121 is a script which is activated, when copying of the content i is instructed in accordance with an input made by the user from the operation section 56 that includes a touch panel and control keys, before copying of the content i is started. The recording ending script 122 is a script which is activated when recording of the content i ends. The move starting script 123 is a script which is activated, when moving of the content i is instructed in accordance with an input made by the user, before moving of the content i is started. The move ending script 124 is a script which is activated when moving of the content i ends.

The entry i included in the content management file includes, in addition to a pointer to the content i, attribute information, a thumbnail image of the content i, and text information, a pointer to the script file j with the pointer being information indicating the position of the script file j recorded on the recording medium 2.

Therefore, when the content i is specified in accordance with an input made by the user from the operation section 56 that includes a touch panel and control keys, the CPU 71 acquires conditions for activating the script file j pointed to by a pointer registered in the entry j corresponding to the content i (in the present example, the conditions include 'when reproduction of the content i is to be started', 'when reproduction of the content i ends', 'when copying of the content i is to be started', 'when recording of the content i ends', 'when moving of the content i is to be started', and "when moving of the content i ends).

When reproduction of the content i is instructed in accordance with an input made by the user, the CPU 71 activates the reproduction starting script 81 included in the script file j based on the pointer registered in the entry i and pointing to the script file j. When the reproduction of the content i ends, the CPU 71 activates the reproduction ending script 82 based on the pointer registered in the entry i and pointing to the script file j.

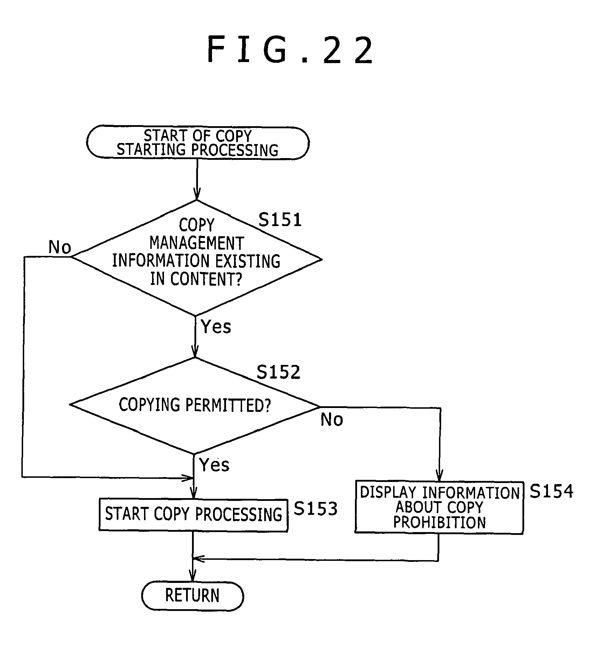

When copying of the content i is instructed in accordance with an input made by the user , the CPU 71 activates the copy starting script 121 included in the script file j based on the pointer registered in the entry i and pointing to the script file j. Namely, the CPU 71 executes copy starting processing, being described later with reference to Figure 22, in accordance with the copy starting script 121 read out from the recording medium 2 and loaded in the RAM 72.

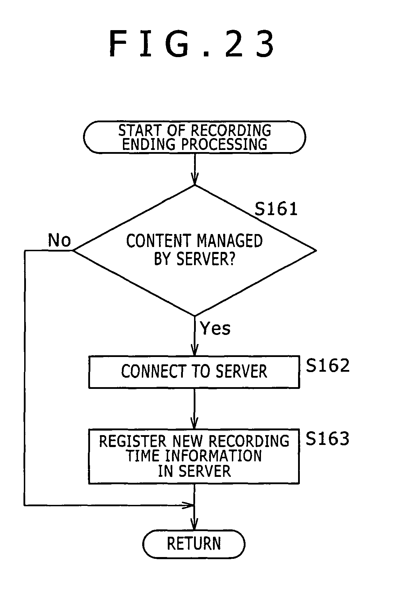

When the recording of the content i ends, the CPU 71 activates the recording ending script 122 included in the script file j based on the pointer registered in the entry i and pointing to the script file j. Namely, the CPU 71 executes recording ending processing, being described later with reference to Figure 23, in accordance with the recording ending script 122 read out from the recording medium 2 and loaded in the RAM 72.

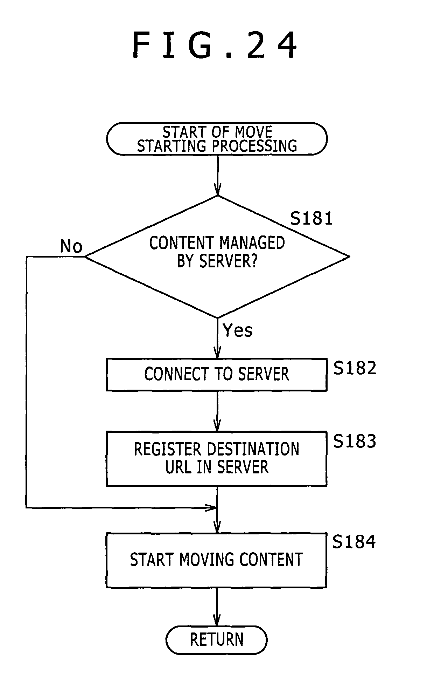

When moving of the content i is instructed in accordance with an input made by the user, the CPU 71 activates the move starting script 123 included in the script file j based on the pointer registered in the entry i and pointing to the script file j. Namely, the CPU 71 executes move starting processing, being described later with reference to Figure 24, according the move starting script 123 read out from the recording medium 2 and loaded in the RAM 72.

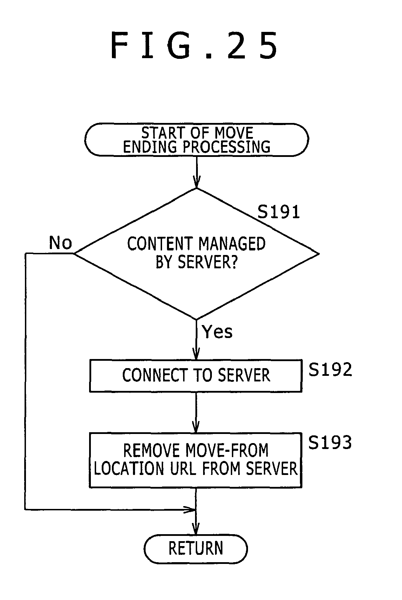

Similarly, when the moving of the content i ends, the CPU 71 activates the move ending script 124 included in the script file j based on the pointer registered in the entry i and pointing to the script file j. Namely, the CPU 71 executes move ending processing, being described later with reference to Figure 25, in accordance with the move ending script 124 read out from the recording medium 2 and loaded in the RAM 72.

As described above, plural scripts may be registered in a script file recorded on the recording medium 2 and a pointer to the script file recorded on the recording medium 2 may be registered in an entry included in a content management file. Doing so allows use of a unified pointer to a script file included in an entry, so that it does not become necessary to register plural pieces of pointer information. At the same time, the file capacity requirement for the content management file can be reduced.

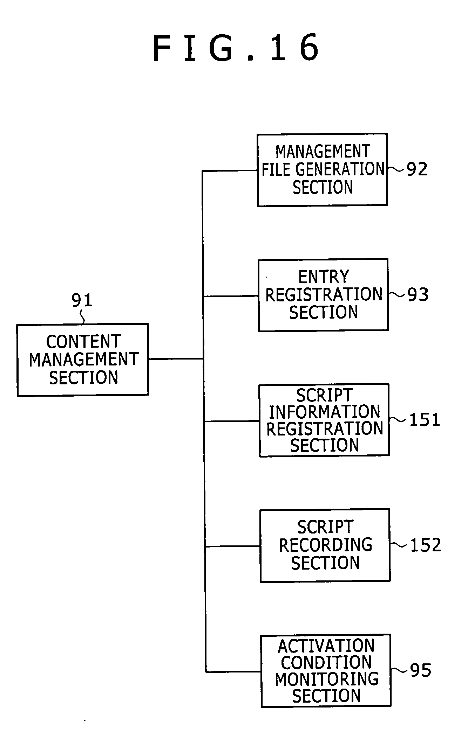

Figure 16 is a block diagram showing another example functional configuration of the imaging device 1 that manages a content management file as shown in Figure 14. In Figure 16, parts corresponding to those shown in Figure 6 are denoted by the corresponding reference numbers, and descriptions of such parts are omitted in the following to avoid duplication.

The content management section 91 controls the management file generation section 92, the entry registration section 93, a script information registration section 151, a script recording section 152, and the activation condition monitoring section 95 in accordance with inputs made by the user from the operation section 56 that includes a touch panel and control keys and entries included in the content management file generated on the recording medium 2.

In a case in which, after recording of a content ends, the entry corresponding to the content includes no pointer information pointing to a script file for controlling the content, the script information registration section 151 registers, under the control of the content management section 91, pointer information pointing to the script file for controlling the content in the entry corresponding to the content. At this time, if the script file recorded on the recording medium 2 does not include a prescribed script, the script recording section 152 registers (records), under the control of the content management section 91, the prescribed script stored in the flash ROM 73 in the corresponding script file recorded on the recording medium 2.

When the content i is specified in accordance with an input made by the user, the activation condition monitoring section 95 acquires, under the control of the content management section 91, conditions for activating various scripts registered in the script file registered in the entry i corresponding to the content i, and subsequently activates the scripts in accordance with the corresponding conditions for activation.

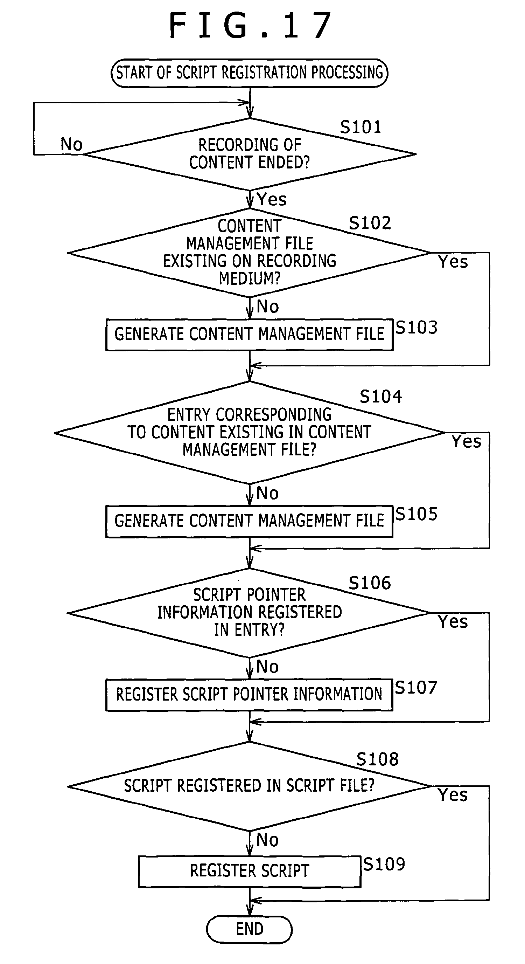

Next, with reference to the flowchart shown in Figure 17, the script registration processing performed by the imaging device 1 shown in Figure 16 will be described. The contents of steps S101 to S105 shown in Figure 17 are basically the same as those of steps S1 to S5 shown in Figure 7, so that their descriptions will be omitted where it is appropriate to do so to avoid duplication.

The content management section 91 in step S101 shown in Figure 17 remains waiting until recording of a content on the recording medium 2 ends. When it is determined that the recording of the content on the recording medium 2 has ended, the content management section 91 advances to step S102 and determines whether or not a content management file is recorded on the recording medium 2. When it is determined in step S102 that there is no content management file recorded on the recording medium 2, the content management section 91 advances to step S103. In step S103, it generates a content management file on the recording medium 2 by controlling the management file generation section 92 and advances to step S104.

When it is determined in step S102 that a content management file is recorded on the recording medium 2, the content management section 91 advances to step S104, skipping step S103.

In step S104, the content management section 91 determines whether or not an entry corresponding to the content recorded on the recording medium 2 exists (is registered) in the content management file. When it is determined that no entry corresponding to the content recorded on the recording medium 2 exists in the content management file, the content management section 91 advances to step S105. In step S105, the content management section 91 registers, by controlling the entry registration section 93, an entry corresponding to the content recorded on the recording medium 2 in the content management file, and advances to step S106. When it is determined in step S104 that an entry corresponding to the content recorded on the recording medium 2 exists on the recording medium 2, the content management section 91 advances to step S106, skipping step S105.

The content management section 91 determines in step S106 whether or not pointer information (script pointer information) pointing to a script file is registered in the entry corresponding to the content recorded on the recording medium 2. When it is determined that no pointer information pointing to a script file is registered in the entry corresponding to the content recorded on the recording medium 2, the content management section 91 registers, by controlling the script information registration section 151 in step S107, a pointer to a prescribed script file which is recorded on the recording medium 2 in the entry corresponding to the content recorded on the recording medium 2, and then advances to step S108. In a case in which no prescribed script file exists on the recording medium 2, the content management section 91 generates a prescribed script file (that is, an empty script file with no scripts) and registers pointer information pointing to the prescribed script file.

When it is determined in step S106 that pointer information pointing to a script file is registered in the entry corresponding to the content recorded on the recording medium 2, the content management section 91 advances to step S108, skipping step S107.

The content management section 91 determines in step S108 whether or not a prescribed script is registered in the script file that is recorded on the recording medium 2 and that is pointed to by a pointer registered in the entry. When it is determined that no prescribed script is registered in the script file recorded on the recording medium 2, the content management section 91 registers (records), by controlling the script recording section 152 in step S109, a prescribed script stored in the flash ROM 73 in the script file pointed to by a pointer registered in the entry, and then ends the registration processing.

When it is determined in step S108 that a prescribed script is registered in the script file that is recorded on the recording medium 2 and that is pointed to by a pointer registered in the entry, the content management section 91 ends the script registration processing, skipping step S109.

As described above, in the imaging device 1 shown in Figure 16, a content management file for managing a content recorded on the recording medium 2 is generated; an entry corresponding to the content recorded on the recording medium 2 is registered in the content management file; and pointer information pointing to a prescribed script file recorded on the recording medium 2 is registered in the entry corresponding to the content recorded on the recording medium 2.

Therefore, even in a case in which a new script distributed, for example, via the network 3 is to be additionally registered, the new script can be registered easily just by adding it to the corresponding entry.

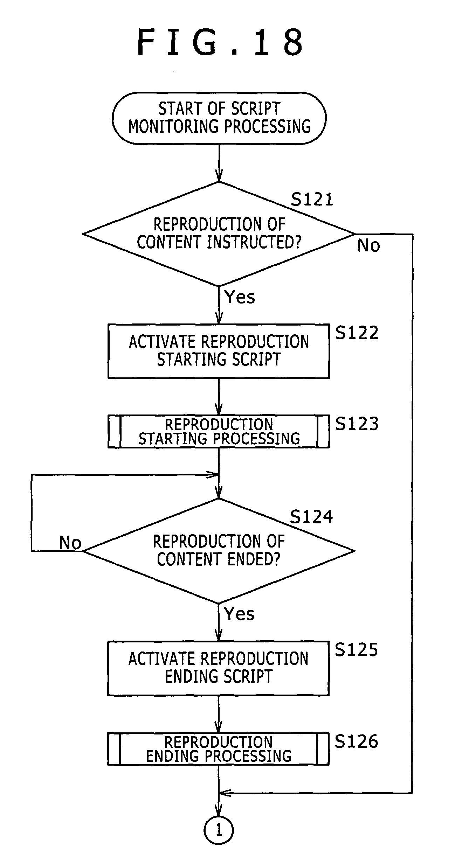

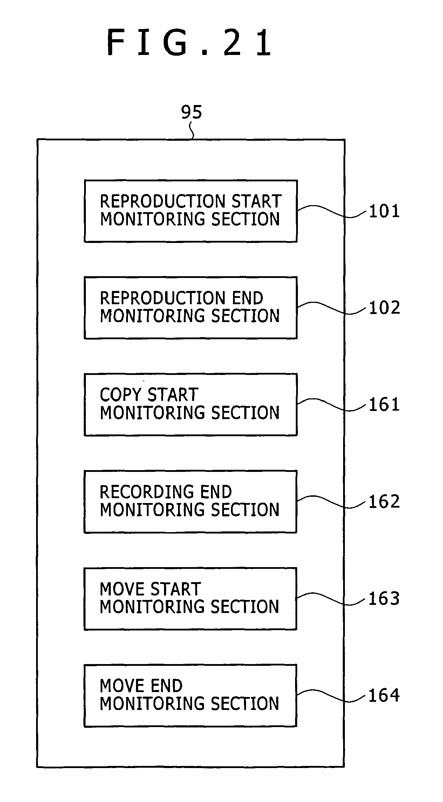

Next, with reference to the flowcharts shown in Figures 18 to 20, script monitoring processing for monitoring scripts recorded on the recording medium 2 performed by the imaging device 1 shown in Figure 16 will be described. In the present example, the content management file is assumed to have a configuration as shown in Figures 14 and 15. The script monitoring processing is another example of script monitoring processing performed in step S23 shown in Figure 8. It is executed by the activation condition monitoring section 95 shown in Figure 21.

Figure 21 is a functional block diagram of the activation condition monitoring section 95 that executes the script monitoring processing shown in Figures 18 to 20. In Figure 21, parts corresponding to those shown in Figure 10 are denoted by the corresponding reference numbers, and descriptions of such parts are omitted in the following to avoid duplication.

In the example shown in Figure 21, the activation condition monitoring section 95 includes, in addition to the reproduction start monitoring section 101 that monitors conditions for activating the reproduction starting script 81 and the reproduction end monitoring section 102 that monitors conditions for activating the reproduction ending script 82, a copy start monitoring section 161 which monitors conditions for activating the copy starting script 121, a recording end monitoring section 162 which monitors conditions for activating the recording ending script 122, a move start monitoring section 163 which monitors conditions for activating the move starting script 123, and a move end monitoring section 164 which monitors conditions for activating the move ending script 124.

The copy start monitoring section 161 monitors whether or not copying of the content i has been instructed. When the copy start monitoring section 161 determines that copying of the content i has been instructed, it activates the copy starting script 121 registered in the script file j based on the corresponding pointer registered in the entry i. The copy end monitoring section 162 monitors whether or not copying of the content i has ended. When the copy end monitoring section 162 determines that copying of the content i has ended, it activates the recording ending script 122 registered in the script file j based on the corresponding pointer registered in the entry i.

The move start monitoring section 163 monitors whether or not moving of the content i has been instructed. When it determines that moving of the content i has been instructed, it activates the move starting script 123 registered in the script file j based on the corresponding pointer registered in the entry i. The move end monitoring section 164 monitors whether or not moving of the content i has ended. When it determines that moving of the content i has ended, it activates the move ending script 124 registered in the script file j based on the corresponding pointer registered in the entry i.

Accordingly, in step S121 shown in Figure 18, the reproduction start monitoring section 101 determines whether or not reproduction of the content i has been instructed in accordance with an input made by the user from the operation section 56 that includes a touch panel and control keys. When the reproduction start monitoring section 101 determines that reproduction of the content i has been instruction, it advances to step S122. In step S122, it activates the reproduction starting script 81 in the script file j based on the corresponding pointer registered in the entry i and then advances to step S123. The reproduction starting script 81 activated in step S122 executes reproduction starting processing in step S123. The reproduction starting processing is similar to the reproduction starting processing described above with reference to the flowchart shown in Figure 11, so that its description is omitted here to avoid duplication.

As, in step S123 shown in Figure 9, the content i starts being reproduced from the reproduction starting position set by the reproduction starting script 81, the reproduction end monitoring section 102 advances to step S124 and remains waiting until the reproduction of the content ends. When it is determined that the reproduction of the content has ended, the reproduction end monitoring section 102 activates the reproduction ending script 82 in the script file j based on the corresponding pointer registered in the entry i and then advances to step S126. In step S126, the reproduction ending script 82 activated in step S125 executes reproduction ending processing. The reproduction ending processing is similar to the reproduction ending processing described above with reference to the flowchart shown in Figure 12, so that its description is omitted here to avoid duplication.

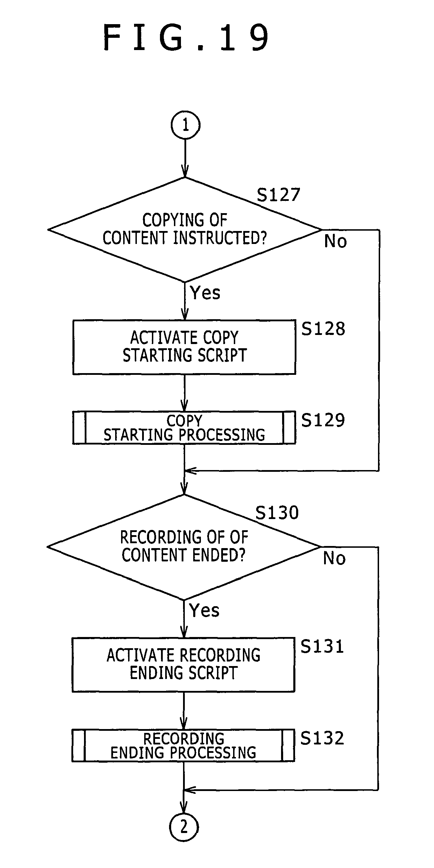

In step S126, information about the reproduction ended position of the content i set by the reproduction ending script 82 is stored, and the processing advances to step S127 shown in Figure 19. If, on the other hand, it is determined in step S121 that reproduction of the content i has not been instructed, the processing advances to step S127 shown in Figure 19, skipping steps S122 to S126.

In step S127 shown in Figure 19, the copy start monitoring section 161 determines whether or not copying of the content i has been instructed in accordance with an input made by the user. When it is determined that copying of the content i has been instructed, the copy start monitoring section 161 advances to step S128. In step S128, it activates the copy starting script 121 in the script file j based on the corresponding pointer registered in the entry i, and then advances to step S129. In step S129, the copy starting script 121 activated in step S128 executes the copy starting processing. The copy starting processing will be described in the following with reference to the flowchart shown in Figure 22.

The copy starting script 121 determines in step S151 shown in Figure 22 whether or not copy management information exists in the content i. The copy management information is used for copyright management. It is written, for example, in the header of the content i, and includes, for example, information as to whether or not copying of the content i is permitted. When the copy starting script 121 determines in step S151 that the copy management information exists in the content i, it advances to step S152. In step S152, it determines whether or not copying of the content i is permitted.

When it is determined in step S151 that there is no copy management information in the content i or when it is determined in step S152 that copying of the content i is permitted according to the copy management information, the copy starting script 121 advances to step S153. In step S153, the copy starting script 121 reads out image data of the content i recorded on the recording medium 2, then, by controlling the signal section 52, starts copying the content i, ends copying the content i, and returns to step S130 shown in Figure 19.

Describing the processing performed in step S153 in concrete terms, the signal processing section 52 is read out, under the control of the copy starting script 121, from the recording medium 2, and it then performs such processing as copying compressed image data received via the media I/F 54 to another recording medium via the media I/F 54, or copying the image data to an external personal computer via the external I/F 59, or copying the image data to the server 4 connected to the network 3.

When, in step S152, it is determined that copying of the content i is not permitted according to the copy management information, the copy starting script 121, by controlling the LCD controller 57 in step S154, displays information about the prohibition of copying on the LCD 58. In more concrete terms, the LCD controller 57 forms an image signal under the control of the copy starting script 121, and supplies the image signal to the LCD 58. As a result, the information about the prohibition of copying is displayed on the screen of the LCD 58. The copy starting script 121 then ends the copy starting processing and returns to step S130 shown in Figure 19.

When, on the other hand, it is determined in step S127 shown in Figure 19 that copying of the content i has not been instructed, the processing advances to step S130, skipping steps S128 and S129. The recording end monitoring section 162 determines in step S130 whether or not recording of the content to the recording medium 2 has ended or not. For example, when it is determined in step S130 that, with the content i having been recorded to the recording medium 2, recording of the content i has ended, the recording end monitoring section 162 advances to step S131. In step S131, the recording end monitoring section 162 activates the recording ending script 122 in the script file j based on the corresponding pointer registered in the entry i, and then advances to step S132. In step S132, the recording ending script 122 activated in step S131 executes the recording ending processing. The recording ending processing will be described in the following with reference to the flowchart shown in Figure 23.

The recording ending script 122 determines in step S161 shown in Figure 23 whether or not the content i recorded on the recording medium 2 is a content managed by the server 4. In the present example, when the content i is managed by the server 4, the attribute information included in the entry i corresponding to the content i includes relevant server management information.

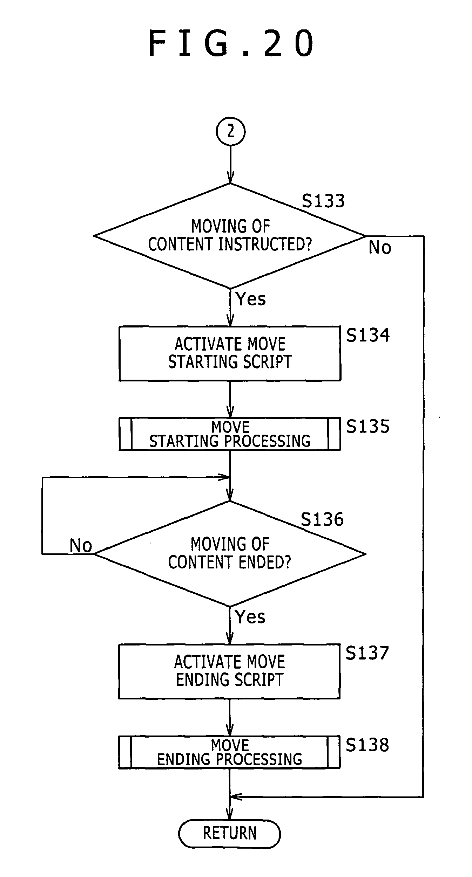

Therefore, when the recording ending script 122 determines in step S161 that the content i recorded on the recording medium 2 is managed by the server 4, it advances to step S162, connects to the server 4 via the external I/F 59 and the network 3, and then advances to step S163. In step S163, the recording ending script 122 registers new recording time information including information about the recording of the content i in a database in the storage section 18, where information about the content i is stored, of the server 4. The recording ending script 122 then ends recording ending processing and returns to step S133 shown in Figure 20.

When the recording ending script 122 determines in step S161 that the content i recorded on the recording medium 2 is not managed by the server 4, it ends the recording ending processing, skipping steps S162 and S163, and returns to step S133 shown in Figure 20.

If, for example, it is determined in step S130 shown in Figure 19 that recording of the content i has not ended with the content i not having been recorded to the recording medium 2, the recording ending monitoring section 162 advances to step S133 shown in Figure 20, skipping steps S131 and S132.

The move start monitoring section 163 determines in step S133 shown in Figure 20 whether or not moving of the content i has been instructed in accordance with an input made by the user. When the move start monitoring section 163 determines that moving of the content i has been instructed, it advances to step S134. In step S134, it activates the move starting script 123 in the script file j based on the corresponding pointer registered in the entry i, and then advances to step S135. The move starting script 123 activated in step S134 executes the move starting processing in step S135. The move starting processing will be described in the following with reference to the flowchart shown in Figure 24.

The move starting script 123 determines in step S181 shown in Figure 24 whether or not the content i is managed by the server 4. In the present example, when the content i is managed by the server 4, the attribute information included in the entry i corresponding to the content i includes relevant server management information. Therefore, when, in step S181, the move starting script 123 determines based on the attribute information in the entry i that the content i is managed by the server 4, it advances to step S182, connects to the server 4 via the external I/F 59 and the network 3, and then advances to step S183. In step S183, the move starting script 123 registers the URL (Uniform Resource Locator) of the destination to which the content i is to be moved in a database in the storage section 18, where information about the content i is stored, of the server 4. It then advances to step S184.

When it is determined in step S181 that the content i is not managed by the server 4, the move starting script 123 advances to step S184, skipping skips S182 and S183. In step S184, it starts moving the content i, ends the move starting processing shown in Figure 24, and returns to step S136 shown in Figure 20.

Describing the processing performed in step S184 in concrete terms, the signal processing section 52 is read out, under the control of the move starting script 123, from the recording medium 2, and it then performs such processing as moving (recording) compressed image data received via the media I/F 54 to another recording medium via the media I/F 54, or moving (recording) the image data to an external personal computer via the external I/F 59, or moving (recording) the image data to the server 4 connected to the network 3. Subsequently, the original content i recorded on the recording medium 2 is removed and the move processing is ended.

The move end monitoring section 164 in step S136 shown in Figure 20 remains waiting until moving of the content i ends. When it determines that moving of the content i has ended, it activates, in step S137, the move ending script 124 registered in the entry i, and then advances to step S138. In step S138, the move ending script 124 activated in the step S137 executes the move ending processing. The move ending processing will be described in the following with reference to the flowchart shown in Figure 25.

The move ending script 124 determines in step S191 shown in Figure 25 whether or not the content i is managed by the server 4. In the present example, when the content i is managed by the server 4, the attribute information included in the entry i corresponding to the content i includes relevant server management information. Therefore, when, in step S191, the move ending script 124 determines based on the attribute information in the entry i that the content i is managed by the server 4, it advances to step S192, connects to the server 4 via the external I/F 59 and the network 3, and then advances to step S193. In step S193, the move ending script 124 deletes the URL of the move-from location (where the content i existed prior to the move) from the database in the storage section 18, where information about the content i is stored, of the server 4. Subsequently, the move ending script 124 ends the move ending processing, and returns control to the processing shown in Figure 20. The activation condition monitoring section 95 then ends the script monitoring processing shown in Figure 20 and returns control to the processing shown in Figure 8. The content management section 91 then ends the content management processing shown in Figure 8.

When it is determined in step S191 that the content i is not managed by the server 4, the move ending script 124 ends the move ending processing shown in Figure 25, skipping steps S192 and S193, and returns control to the processing shown in Figure 20. Subsequently, the activation condition monitoring section 95 ends the script monitoring processing shown in Figure 20 and returns control to the processing shown in Figure 8. The content management section 91 then ends the content management processing shown in Figure 8.

When, on the other hand, it is determined in step S133 shown in Figure 20 that moving of the content i has not been instructed in accordance with an input made by the user, the move start monitoring section 163 ends the script monitoring processing shown in Figure 20, skipping steps S134 to S138, and returns control to the processing shown in Figure 8. The content management section 91 then ends the content management processing shown in Figure 8.

As described above, pointer information pointing to the reproduction starting script 81, an activation condition for which is inputting of an instruction to start reproduction of a content, and the reproduction ending script 82, an activation condition for which is ending of the reproduction of the content, is registered in an entry included in the content management file and the activation conditions are monitored, so that the scripts can be activated when the corresponding activation conditions are met. Therefore, in a case in which the position where reproduction of a content was ended last time is stored and in which reproduction of the same content is resumed within 24 hours, a time-limited resume-reproduction function to start reproduction of the content from the stored position can be realized. With this arrangement, when reproducing a content within 24 hours of when the content was previously reproduced, the user can start reproducing the content from where its reproduction ended last time.

In addition, pointer information pointing to the copy staring script 121, an activation condition for which is inputting of an instruction to start copying of a content, is registered in an entry included in the content management file and the activation condition is monitored, so that the copy starting script 121 can be activated when the activation condition is met. This arrangement enables content copying processing to be performed based on relevant copy management information. In this way, the user, when copying a content, is not required to take trouble to check copy management information.

Furthermore, pointer information pointing to the recording ending script 122, an activation condition for which is ending of recording of a content, the move starting script 123, an activation condition for which is inputting of an instruction to start moving a content, and the move ending script 124, an activation condition for which is ending of moving of a content, is registered in an entry included in the content management file, and the activation conditions for the scripts are monitored, so that the scripts can be activated when the corresponding activation conditions are met. Therefore, information about the content can be updated without bothering the user. This makes it possible to centrally manage content information in the server 4.

As described above, prescribed scripts to be activated when prescribed processing of a content occurs are registered, and pointer information pointing to the scripts is registered in an entry corresponding to the content. This arrangement makes it possible to execute different processing for different contents.

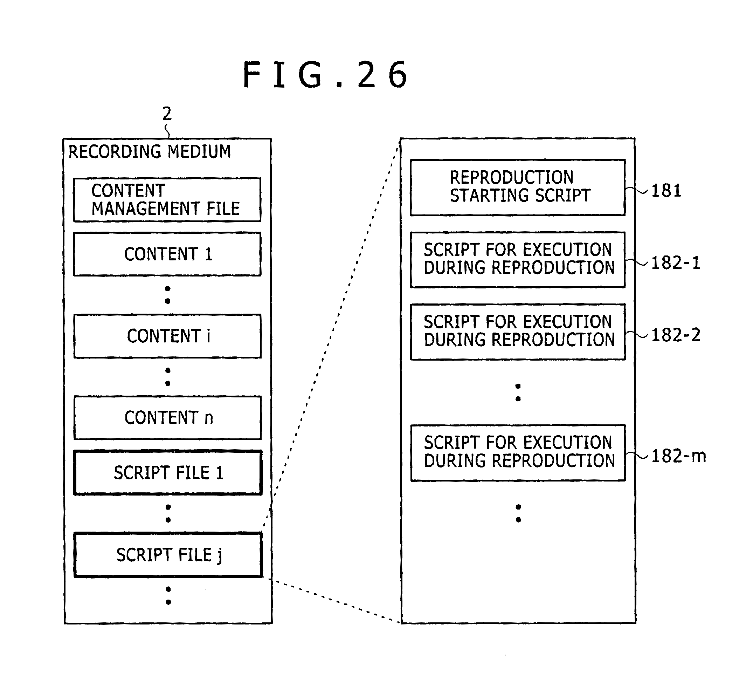

Figure 26 shows another example configuration of the script file j generated on the recording medium 2.

In the example configuration shown in Figure 26, a content management file, contents 1, 2, ···, i, ···, n (1 ≤ i ≤ n), and script files 1, ···, j, ··· are recorded on the recording medium 2 as in the example configuration shown in Figure 15. In the script file j, a reproduction starting script 181 and scripts for execution during reproduction 182-1, 182-2, ···, 182-m (hereinafter referred to as the script for execution during reproduction 182, except where differentiation using hyphenated reference numbers is required) are registered. In the script file j shown in Figure 26, other scripts than the reproduction starting script 181 and the script for execution during reproduction 182 are also registered, but they are not shown in Figure 26 to simplify description.

The reproduction starting script 181, like the reproduction starting script 81, is a script which is activated, when reproduction of the content i is instructed in accordance with an input made by the user from the operation section 56 that includes a touch panel and control keys, before reproduction of the content i is started. The script for execution during reproduction 182 are is a script which is activated, during reproduction of the content i, when a condition for activation set by the reproduction starting script 181 or the script for execution during reproduction 182 is met. Namely, in the example configuration shown in Figure 26, the reproduction starting script 181 and the script for execution during reproduction 182 each set, by being activated, a condition for activating another of the script for execution during reproduction 182.

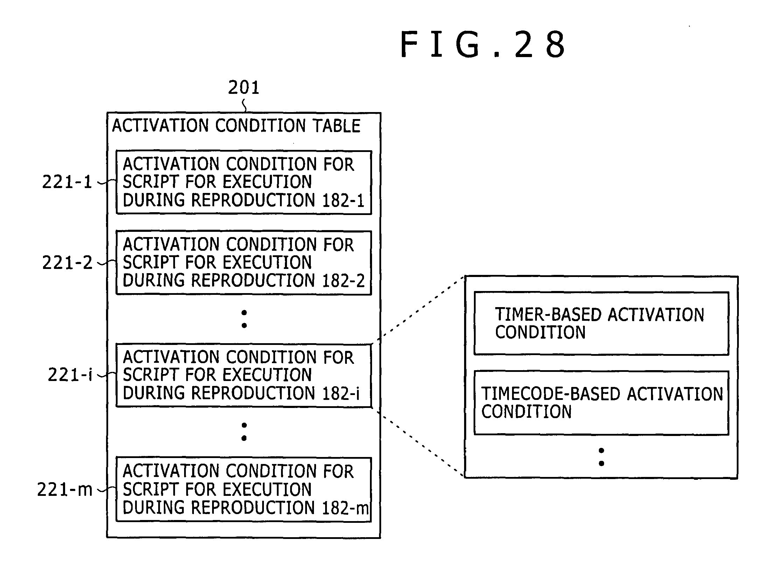

In the example configuration shown in Figure 26, when the content i is specified in accordance with an input made by the user from the operation section 56 that includes a touch panel and control keys, the CPU 71 acquires conditions for activating the script file (in the present example, to be activated when starting reproduction of the content i is instructed) pointed to by a pointer registered in the entry i corresponding to the content i. If, at this time, the script for execution during reproduction 182 exists in the script file, the CPU 71 generates an activation condition table 201, being described later with reference to Figure 28, in, for example, the RAM 72.

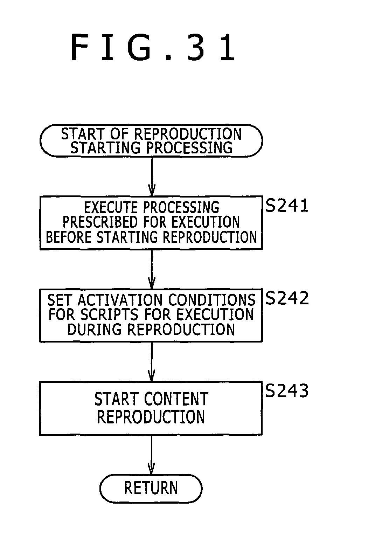

When reproduction of the content i is instructed in accordance with an input made by the user, the CPU 71 activates the reproduction starting script 181 in the script file j based on the corresponding pointer registered in the entry i. Namely, the CPU 71 executes reproduction starting processing, being described later with reference to Figure 31, in accordance with the reproduction starting script 181 read out from the recording medium 2 and loaded in the RAM 72.

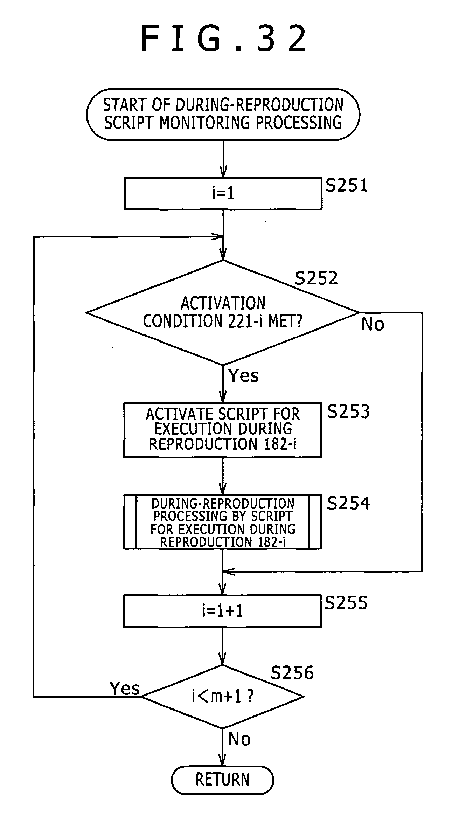

Furthermore, while the content i is being reproduced, the CPU 71 activates the script for execution during reproduction 182 based on the corresponding pointer registered in the entry i complying with the corresponding activation condition set in the activation condition table 201, for example, by the reproduction starting script 181. Namely, the CPU 71 executes during-reproduction processing, being described later with reference to Figure 32, in accordance with the script for execution during reproduction 182 read out from the recording medium 2 and loaded in the RAM 72.

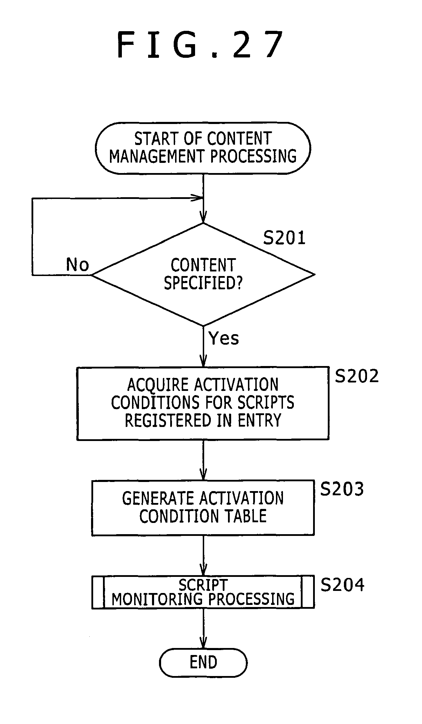

Next, with reference to the flowchart shown in Figure 27, another example of content management processing performed in the imaging device 1 to manage contents recorded on the recording medium 2 will be described in the following. The contents of steps S201 and S202 shown in Figure 27 are basically the same as those of steps S21 and S22 shown in Figure 8, so that their descriptions will be omitted where it is appropriate to do so to avoid duplication. The processing shown in Figure 27 will be described focusing on the script file j in the content management file shown in Figure 26.

In step S201 shown in Figure 27, the content management section 91 remains waiting until the content i is specified. When it is determined that the content i has been specified in accordance with an input made by the user from the operation section 56, the content management section 91 controls, in step S202, the activation condition monitoring section 95 to acquire conditions for activating a script (that is, in the present example, the reproduction starting script 181) which is registered in the script file j pointed to by a pointer in the entry i corresponding to the content i, and then advances to step S203. Even though, when step S202 is executed, conditions for activating the script for execution during reproduction 182, not yet having been set, are not acquired, presence of the script for execution during reproduction 182 registered in the script file j is recognized during that time.

In step S203, the activation condition monitoring section 95 generates, in the RAM 72, the activation condition table 201 for the script for execution during reproduction 182, and advances to step S204.

Figure 28 shows an example configuration of the activation condition table 201. In the example configuration shown in Figure 28, the activation condition table 201 includes conditions 221-1 for activating a script for execution during reproduction 182-1, 221-2 for activating a script for execution during reproduction 182-2, ···, 221-i for activating a script for execution during reproduction 182-i, ···, and 221-m for activating a script for execution during reproduction 182-m (1 ≤ i ≤ m). The condition 221 for activating the script for execution during reproduction 182 may be a timer-based activation condition or a timecode-based activation condition. The activation conditions 221-1 to 221-m (hereinafter referred to as the activation condition 221, except where differentiation using hyphenated reference numbers is required) are to be set by the reproduction starting script 181 or the script for execution during reproduction 182. In the state in step S203, the area for the activation condition 221 for activating the script for execution during reproduction 182 is only reserved.

A timer-based activation condition may be, for example, passing of a set time by an internal timer of the CPU 71, a timer time equal to or larger than a prescribed time, a timer time equal to or smaller than a prescribed time, or a timer time within a prescribed range. A timecode-based activation condition may be, for example, in terms of timecode associated with a content being reproduced (timecode included in a content being reproduced), a value of timecode for a content position being reproduced being equal to or smaller than a prescribed timecode value, a value of timecode for a content position being reproduced being equal to or larger than a prescribed timecode value, or a value of timecode for a content position being reproduced being in a prescribed range of timecode value.

Activation conditions are not limited to the above timer-based conditions and timecode-based conditions. Other attribute information (for example, recording time information) about a content may also be used as activation conditions.

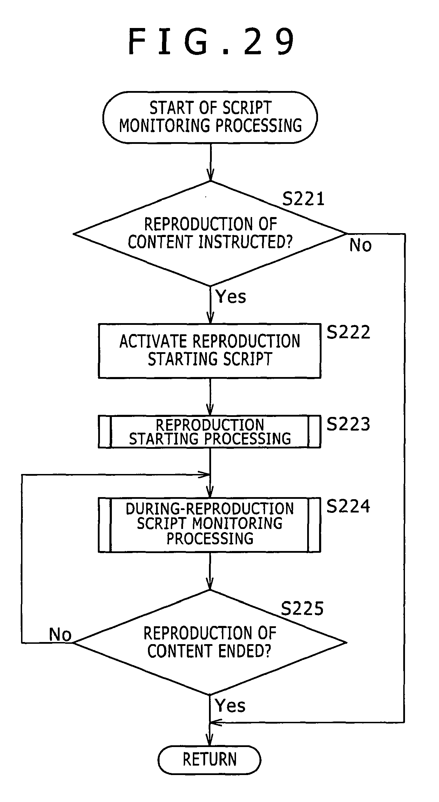

Reverting to Figure 27, the activation condition monitoring section 95 executes, in step S204, script monitoring processing shown in Figure 29. After the script monitoring processing ends, the content management section 91 ends the processing for managing contents recorded on the recording medium 2.

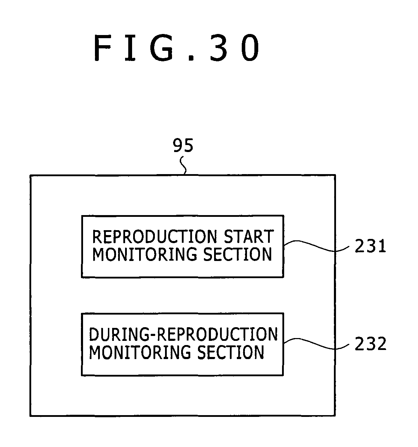

Next, the script monitoring processing executed in step S204 shown in Figure 27 will be described in the following with reference to the flowchart shown in Figure 29. The script monitoring processing shown in Figure 29 is processing to be executed by the activation condition monitoring section 95 shown in Figure 30.

Figure 30 shows a functional block diagram of the activation condition monitoring section 95 that executes the script monitoring processing shown in Figure 29. In the example shown in Figure 30, the activation condition monitoring section 95 includes a reproduction start monitoring section 231 which monitors activation conditions for the reproduction starting script 181 and a during-reproduction monitoring section 232 which monitors activation conditions for the script for execution during reproduction 182.

The reproduction start monitoring section 231, like the reproduction start monitoring section 101, monitors whether or not reproduction of the content i has been instructed. When it is determined that reproduction of the content i has been instructed, the reproduction start monitoring section 231 activates the reproduction starting script 181 registered in the script file j pointed to by the corresponding pointer registered in the entry i. The during-reproduction monitoring section 232 monitors, while the content i is being reproduced, the activation condition table 201, and activates, complying with the activation condition 221 set in the activation condition table 201, the script for execution during reproduction 182 registered in the script file j pointed to by the corresponding pointer in the entry i.

Therefore, in step S221 shown in Figure 29, the reproduction start monitoring section 221 determines whether or not reproduction of the content i has been instructed in accordance with an input made by the user from the operation section 56 that includes a touch panel and control keys. When the reproduction start monitoring section 221 determines that reproduction of the content i has been instructed, it advances to step S222. In step S222, it activates the reproduction starting script 181 registered in the script file j pointed to by the corresponding pointer in the entry i, and then advances to step S223. The reproduction starting script 181 activated in step S222 executes reproduction starting processing in step S223. The reproduction starting processing will be described in the following with reference to the flowchart shown in Figure 31.

In step S241 shown in Figure 31, the reproduction starting script 181 executes prescribed processing for execution before reproduction of the content i starts, and advances to step S242. In step S242, it sets the prescribed activation condition 221 for the script for execution during reproduction 182, stores the activation condition 221 thus set in the corresponding activation condition table 201, and then advances to step S243. In step S243, the reproduction starting script 181 starts reproduction of the content i, ends the reproduction starting processing, and returns to step S224 shown in Figure 29. The processing described above sets the activation condition 221 for the script for execution during reproduction 182.

In step S224 shown in Figure 29, the during-reproduction monitoring section 232 executes, based on the activation condition table 201, during-reproduction script monitoring processing. The during-reproduction script monitoring processing will be described in the following with reference to the flowchart shown in Figure 32.

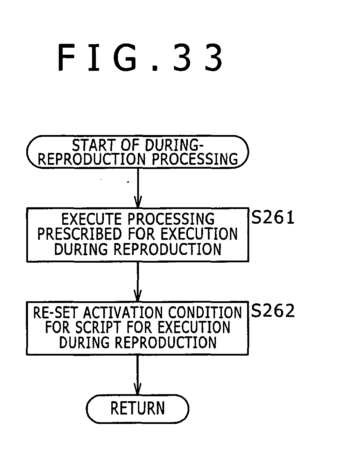

In step S251 shown in Figure 32, the during-reproduction monitoring section 232 sets the value of i to 1 (i = 1), and advances to step S252. The activation condition 221-1 for the script for execution during reproduction 182-1 has been set in step S242 shown in Figure 31. The during-execution monitoring section 232, therefore, determines in step S252 whether or not the activation condition 221-i (that is, in the present example, the activation condition 221-1) is met. When it is determined that the set activation condition 221-1 is met, the during-reproduction monitoring section 232 advances to step S253. In step S253, the during-reproduction monitoring section 232 activates the script for execution during reproduction 182-i (that is, in the present example, the script for execution during reproduction 182-1) registered in the script file j pointed to by the corresponding pointer in the entry i, and then advances to step S254. In step S254, the script for execution during reproduction 182-1 activated in step S253 executes during-reproduction processing. The during-reproduction processing will be described in the following with reference to the flowhchart shown in Figure 33.

In step S261 shown in Figure 33, the script for execution during reproduction 182-1 executes prescribed processing for execution during reproduction, and advances to step S262. In step S262, it again sets the activation condition 221 for another of the script for execution during reproduction 182 (that is, in the present example, the activation condition 221-2 for the next script for execution during reproduction 182-2), and stores the activation condition 221-2 thus set in the activation condition table 201 for the corresponding script for execution during reproduction 182-2. Subsequently, it ends during-reproduction processing, and returns to step S255 shown in Figure 32.

If, on the other hand, it is determined in step S252 shown in Figure 32 that the activation condition 221-1 is not met, the during-reproduction monitoring section 232 advances to step S255, skipping steps S253 and S254.

In step S255, the during-reproduction monitoring section 232 sets the value of i to 'i + 1' (that is, in the present example, i = 2). It then determines in step S256 whether or not i is smaller than 'm + 1' (m being the number of scripts for execution during reproduction). If it is determined in step S256 that i is smaller than 'm + 1', the during-reproduction monitoring section 232 returns to step S252, and repeats the processing from step S252. That is, it is determined in step S252 that the activation condition 221-2 for the script for execution during reproduction 182-2 is met, and the script for execution during reproduction 182-2 is activated in step S253.

If it is not determined in step S256 that i is smaller than 'm + 1', the during-reproduction monitoring section 232 ends the during-reproduction script monitoring processing and returns to step S225 shown in Figure 29.

In step S225 shown in Figure 29, the reproduction monitoring section 232 determines whether or not reproduction of the content i has ended. When the reproduction monitoring section 232 determines that the reproduction of the content i has not ended, it returns to step S224 and repeats the processing from step S224. When it is determined in step S225 that the reproduction of the content i has ended, the during-reproduction monitoring section ends the script monitoring processing, and returns to the processing shown in Figure 27. Subsequently, the content management section 91 ends the content management processing.

If, on the other hand, the reproduction start monitoring section 231 determines in step S221 that reproduction of the content i has not been instructed, it ends the script monitoring processing, skipping steps S222 to S225, and returns control to the processing shown in Figure 27. In the processing shown in Figure 27, the content management section 91 ends the content management processing for managing contents recorded on the recording medium 2.

As described above, pointer information pointing to the reproduction starting script 181, an activation condition for which is inputting of an instruction for starting reproduction of a content, is registered in an entry in the content management file; the activation condition is monitored, the reproduction starting script 181 is activated when the activation condition is met; and the activation condition 221 for the script for execution during reproduction 182 is set after the reproduction starting script 181 is activated. In this way, various scripts can be activated, complying with prescribed activation conditions for them, not only when processing of a content is started and after processing of a content is ended but also while a content is being reproduced.

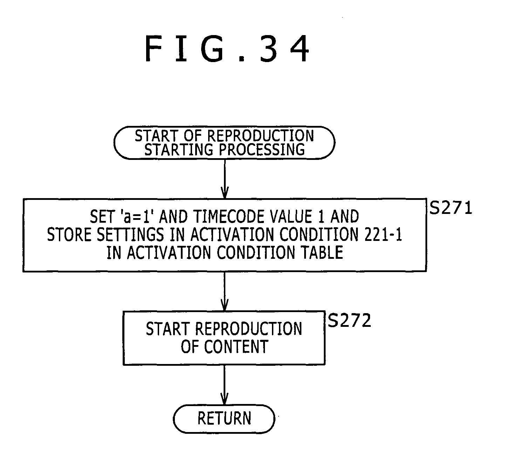

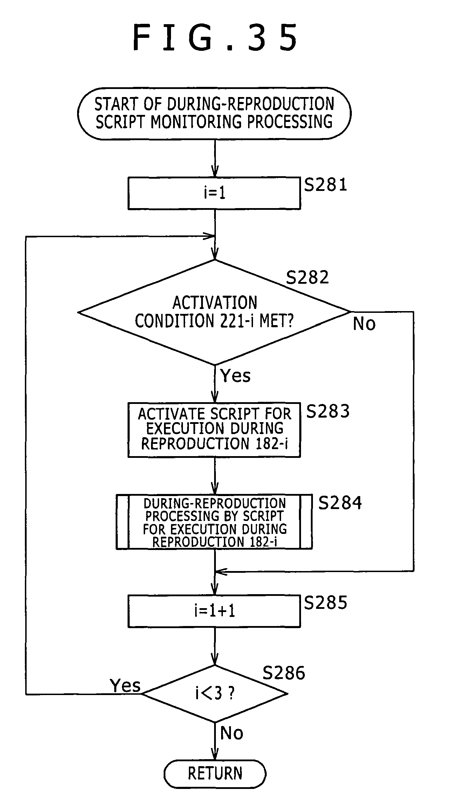

Next, another example of each of the reproduction starting processing and the during-reproduction script monitoring processing performed in steps S223 and S224, respectively, shown in Figure 29 will be described in the following with reference to the flowcharts shown in Figures 34 and 35, respectively. The description is based on the assumption that the reproduction starting script 181 and the scripts for execution during reproduction 182-1 and 182-2 are registered in the script file j.

As it is determined in step S221 shown in Figure 29 that reproduction of a content has been instructed and the reproduction starting script 181 is activated in step S222, the reproduction starting script 181 executes, in step S223, the reproduction starting processing shown in Figure 34.

In step S271 shown in Figure 34, the reproduction starting script 181 sets "a = 1" and an initial timecode value 1 (for example, 5 seconds from the beginning of the content i), stores the time code value 1 in the activation condition 221-1 for the script for execution during reproduction 182-1 with the activation condition being included in the activation condition table 201, and advances to step S272. In step S272, it starts reproduction of the content i by controlling the signal processing section 52, ends the reproduction starting processing, and returns to step S224 shown in Figure 29.

The above reproduction starting processing for the content i causes a moving image and sound of the content i to be reproduced and displayed on the LCD 58. In step S224 shown in Figure 29, the during-reproduction monitoring section 232 executes the during-reproduction script monitoring processing shown in Figure 35.

The during-reproduction monitoring section 232 sets "i = 1" in step S281 shown in Figure 35 and determines in step S282 whether or not the activation condition 221-1 in the activation condition table 201 is met. In the present example, the timecode value 1 (for example, 5 seconds from the beginning of the content i) is set in the activation condition 221-1 for the script for execution during reproduction 182-1 with the activation condition being included in the activation condition table 201. The during-reproduction monitoring section 232, therefore, determines in step S282 whether or not the activation condition 221-1 in the activation condition table 201 is met by checking whether or not the timecode value of the content i has reached the preset time code value 1.

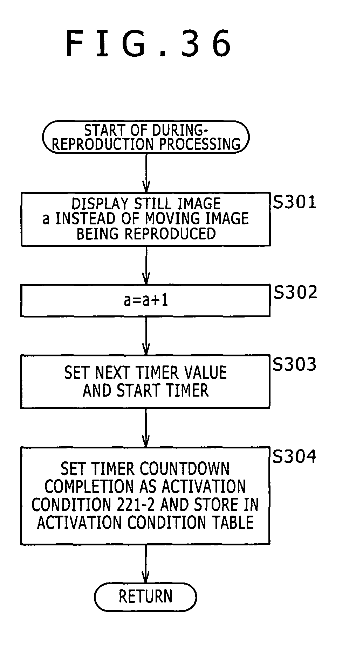

When it is determined in step S282 that the timecode value of the content i has reached the preset timecode value 1, the during-reproduction monitoring section 232 advances to step S283, activates the script for execution during reproduction 182-1 registered in the script file j pointed to by the corresponding pointer in the entry i, and advances to step S284. The script for execution during reproduction 182-1 activated in step S283 executes during-reproduction processing in step S284. The during-reproduction processing executed by the script for execution during reproduction 182-1 will be described in the following with reference to the flowchart shown in Figure 36.

In step S301 shown in Figure 36, the script for execution during reproduction 182-1 displays, instead of the moving image being reproduced, a still image a (in the present case, a = 1) on the LCD 58, and advances to step S302. Namely, when the timecode value of the content i reaches the timecode value 1 while the moving image of the content i is being reproduced, the script for execution during reproduction 182-1 reads out, instead of the moving image being reproduced, prescribed still image 1 data stored, for example, on the recording medium 2 and supplies the data to the LCD controller 57 via the system bus 75. The LCD controller 57 forms, using the supplied still image 1 data, an image signal and supplies the image signal to the LCD 58. As a result, the still image 1 is displayed on the screen of the LCD 58 instead of the moving image being reproduced. At this time, even though the moving image is not displayed, both the moving image and sound are reproduced as they are.

The script for execution during reproduction 182-1 sets the value of a to 'a + 1' in step S302, and advances to step S303. In step S303, it sets the next timer value 1 in an internal timer (not shown) of the CPU 71, starts the timer, and then advances to step S304. In step S304, the script for execution during reproduction 182-1 sets 'countdown completion on the timer' as the activation condition 221-2 for the script for execution during reproduction 182-2, and stores the activation condition 221-2 in the activation condition table 201. Subsequently, the script for execution during reproduction 182-1 ends the during-reproduction processing, and returns to step S285 shown in Figure 35.

In step S285 shown in Figure 35, the during-reproduction monitoring section 323 sets the value of i to 'i + 1' (that is, in the present example, i = 2). In step S286, it determines whether or not i is smaller than 'm + 1'. Since, in the present example, m (number of scripts for execution during reproduction) is two (m = 2), it is determined in step S256 that i is smaller than 3. As a result, the during-reproduction monitoring section 232 returns to step S282 and repeats the processing from step S282.

Namely, the during-reproduction monitoring section 232 in step S282 remains waiting until the activation condition 221-2 is met. In the present example, 'countdown completion of the timer value 1' (for example, 3 seconds) is set, in the activation condition table 201, as the activation condition 221-2 for the script for execution during reproduction 182-2. The during-reproduction monitoring section 232, therefore, determines whether or not the activation condition 221-2 in the activation condition table 201 is met by checking whether or not counting down of the timer value 1 on the timer has completed.

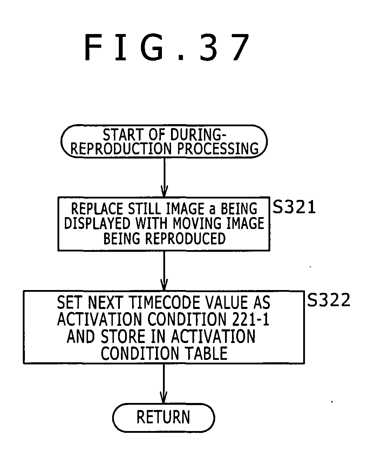

When it is determined in step S282 that counting down of the timer value 1 on the timer has completed, the during-reproduction monitoring section 232 advances to step S283, activates the script for execution during reproduction 182-2 registered in the script file j pointed to by the corresponding pointer in the entry i, and advances to step S284. The script for execution during reproduction 182-2 activated in step S283 executes during-reproduction processing in step S284. The during-reproduction processing will be described in the following with reference to the flowchart shown in Figure 37.

In step S321 shown in Figure 37, the script for execution during reproduction 182-2 replaces the still image 1 being displayed on the LCD 58 with the moving image being reproduced, and advances to step S322. Namely, when, in a state in which the still image 1 is displayed and in which the moving image of the content i is being reproduced, counting down of the set timer value 1 completes, the script for execution during reproduction 182-2 stops supplying the still image 1 to the LCD controller 57 and supplies the moving image data of the content i being reproduced to the LCD controller 57 via the system bus 75.

The LCD controller 57 forms, using the moving image data supplied, an image signal and supplies the image signal to the LCD 58. As a result, the moving image data being reproduced is displayed on the screen of the LCD 58.

In step S322, the script for execution during reproduction 182-2 sets a next timecode value (that is, in the present example, timecode value 2 (for example, 10 seconds from the beginning of the content i)) as the activation condition 221-1 for the script for execution during reproduction 1 and stores the activation condition 221-1 in the activation condition table 201. Subsequently, the script for execution during reproduction 182-2 ends the during-reproduction processing and returns to step S285 shown in Figure 35.

When, on the other hand, it is determined in step S282 shown in Figure 35 that the timecode value of the content i has not reached the timecode value 1, the during-reproduction monitoring section 323 advances to step S285, skipping steps S283 and S284.

In step S285 shown in Figure 35, the during-reproduction monitoring section 323 sets the value of i to 'i + 1' (that is, in the present example, i = 3). It then determines in step S286 whether or not i is smaller than 'm + 1'. Since, in the present example, m (number of scripts for execution during reproduction) is 2, it is not determined in step S256 that i is smaller than 3. The during-reproduction monitoring section 232 therefore ends the during-reproduction script monitoring processing and returns to step S225 shown in Figure 29. This processing is repeated until it is determined in step S225 that the reproduction of the content has ended.

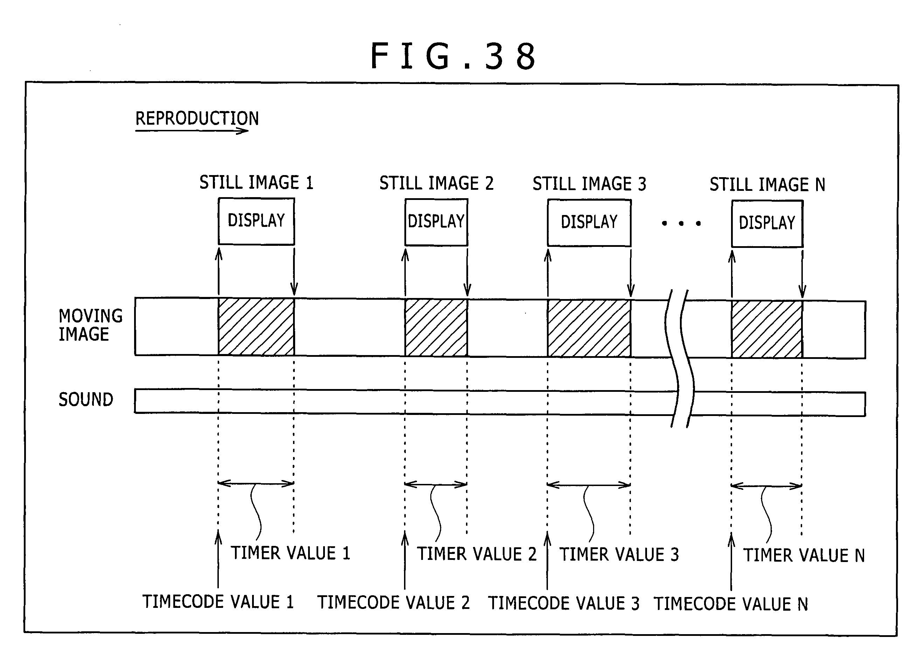

The processing of the script file j (including the reproduction starting script 181 and the scripts for execution during reproduction 182-1 and 182-2) will be described in detail with reference to Figure 38. In the reproduction starting processing performed in step S223 shown in Figure 29, the reproduction starting script 181 reproduces the content i from left to right, based on the illustration in Figure 38. At this time, a moving image is displayed on the LCD 58 and sound is outputted from a speaker (not shown).

When it is determined in step S282 shown in Figure 35 that the timecode value of the content i being reproduced has reached the activation condition 221-1 (timecode value 1 (for example, 5 seconds from the beginning of the content i)) set by the reproduction starting script 181, the script for execution during reproduction 182-1 is activated and the still image 1 stored, for example, on the recording medium 2 is displayed on the LCD 58, replacing the moving image being displayed on the LCD 58 (hatched portions in Figure 38 represent sections with no moving image displayed on the LCD 58). At this time, the script for execution during reproduction 182-1, in steps S303 and S304 shown in Figure 36, sets the timer value 1 (for example, 3 seconds), starts the timer set to the timer value 1, and sets 'completion of timer countdown' as the activation condition 221-2 for the script for execution during reproduction 182-2. Since the number of scripts for execution during reproduction is two (m = 2), the processing returns to step S282 shown in Figure 35.

Counting down of the timer is started after the still image 1 is displayed on the LCD 58. When, with the timer having reached the timer value 1, it is determined in step S282 shown in Figure 35 that counting down of the timer has completed, the script for execution during reproduction 182-2 is activated and, in step S321 shown in Figure 37, the moving image being reproduced replaces the still image 1 being displayed on the LCD 58. At this time, the script for execution during reproduction 182-2 sets, in step S322 shown in Figure 37, timecode 2 (for example, 10 seconds from the beginning of the content i) as the next activation condition 221-1 for the script for execution during reproduction 182-1.

Next, as i equals 3, the processing returns to step S225 shown in Figure 29, then to step S224 with the reproduction of the content not having ended, causing the processing to be repeated from step S224. The content of the processing is as shown in Figure 35. Therefore, when it is determined in step S282 shown in Figure 35 that the timecode value of the content i being reproduced has reached the timecode value 2, the script for execution during reproduction 182-1 (i = 1) is activated and, in step S301 shown in Figure 36, a still image 2 replaces the moving image being displayed on the LCD 58. Then, in steps S303 and S304 shown in Figure 36, the script for execution during reproduction 182-1 sets a timer value 2 (for example, 3 seconds), starts the timer with the timer value 2 set, and sets 'completion of timer countdown' as the next activation condition 221-2 for the script for execution during reproduction 182-2.

As the number of scripts for execution during reproduction is two, the processing returns to step S282 shown in Figure 35. When it is determined that counting down of the timer to the timer value 2 has completed, the script for execution during reproduction 182-2 is activated. The script for execution during reproduction 182-2 replaces, in step S321 shown in Figure 37, the still image 2 being displayed on the LCD 58 with the moving image being reproduced. It then sets, in step S322 shown in Figure 37, a timecode value 3 (for example, 15 seconds from the beginning of the content i) as the next activation condition 221-1 for the script for execution during reproduction 182-1.

Subsequently, the during-reproduction processing is executed, in the manner described above, by the scripts for execution during reproduction 182-1 and 182-2 until the reproduction of the content i ends (until the moving image is replaced by the still image N). In this way, variation can be given to reproduction of a content. It is possible, for example, to replace, during reproduction of a content, plural portions of the moving image being reproduced with prescribed still images. Even though, according to the above description, still images 1 to N are displayed, the still images to be displayed need not be plural. An arrangement may be made to display only one same still image.

As described above, activation conditions for scripts for execution during reproduction are set by the reproduction starting script 181 and the scripts for execution during reproduction 182-1 and 182-2, so that, even during reproduction of a content, the scripts for execution during reproduction 182-1 and 182-2 can be activated based on prescribed activation conditions.

As described above, various scripts are recorded on the recording medium 2, pointer information pointing to the scripts recorded on the recording medium 2 is registered in entries in a content management file, activation conditions for the scripts are monitored, and the scripts are activated when the corresponding activation conditions are met. With this arrangement, it is possible to execute, depending on the condition, different processing for different contents. Furthermore, it is possible to flexibly and easily add various functions just by registering various additional scripts.

The device to which the present invention is applied is not limited to the imaging device 1. The present invention can be applied to a personal computer, PDA, DVD player, mobile terminal, or any other device which records content on a recording medium.

Even though, in the above description, a content management file, script files and contents are recorded on a same removable recording medium, they may be stored in an internal flash ROM, RAM or any other internal fixed storage section of the device. Or, each of them may be stored in a separate storage section whether internal or external to the device.

The pointer to "content i" and the pointer to "script file j" may each be an address on a storage section directly pointing to a physical location, or it may be a logical pointer such as a file name or a URL which specifies a physical location via file system management information or via a network system.

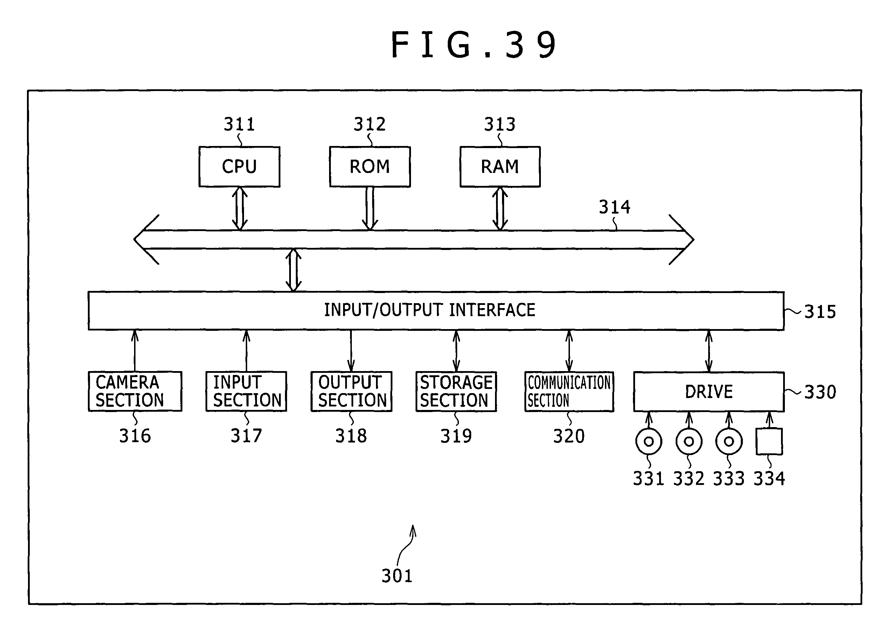

Even though the above-described range of processing can be executed by hardware, the processing can be executed by software, too. In that case, the imaging device 1 shown in Figure 2, for example, is made of an imaging device 301 as shown in Figure 39.

In the configuration shown in Figure 39, a CPU (Central Processing Unit) 311 executes various kinds of processing using programs stored in a ROM (Read Only Memory) 312 or loaded from a storage section 319 to a RAM (Random Access Memory) 313. Data required by the CPU 311 in executing various kinds of processing is also stored in the RAM 313 as required.

The CPU 311, ROM 312, and RAM 313 are interconnected via a bus 314. An I/O interface 315 is also connected to the bus 314.

The devices connected to the I/O interface 315 include a camera section 316 which includes a CCD (Charge Coupled Device) image pickup device, an input section 317 which includes a keyboard and a mouse, a display which includes a CRT (Cathode Ray Tube) and/or an LCD (Liquid Crystal Display), an output section 318 which includes a speaker, a storage section 319 which includes a hard disk, and a communication section 320 which includes a modem and/or a terminal adapter. The communication section 320 executes communication processing via the network 3.

A drive 330 is also connected as required to the I/O interface 315. A magnetic disk 331, an optical disc 332, a magneto-optical disk 333, or a semiconductor memory 334 is loaded in the drive 330 as required. Computer programs read out from such media are installed in the storage section 319 as required.

In a case in which a range of processing is to be executed by software, programs making up the software are installed, via a network or from a recording medium, in a computer built into special-purpose hardware or in, for example, a general-purpose personal computer which can execute various functions by having required programs installed in it.

The recording medium may be, as shown in Figures 3 and 39, an external recording medium on which programs for use by a user are recorded and which are distributed to the user. It may be, for example, any of such packaged media as magnetic disks 21 and 331 (including flexible disks), optical discs 22 and 332 (including CD-ROMs (Compact Disk-Read Only Memories) and DVDs (Digital Versatile Disks), magneto-optical disks 23 and 333 (including MDs (Mini-Disks) (trademark)), and semiconductor memories 24 and 334. Or, it may also be any of ROMs 12 and 312 and hard disks included in the storage sections 18 and 319 on which programs for use by the user are recorded and which are supplied, in a state being preinstalled in the device, to the user.

The steps used, in the present specification, to describe programs to be recorded on a recording medium represent not only processing to be performed in a time-series manner, that is, in the order they are mentioned but also processing to be performed, not necessarily in a time-series manner, concurrently or individually.

### Industrial Applicability

As described above, according to the present invention, different processing can be set easily and flexibly for different contents to be managed.

## Claims

1. An information processing device, comprising:
generation means for generating a management file which manages content recorded on a recording medium, and
program registration means for registering a program, which controls prescribed processing of the content, in the management file generated by the generation means.

2. The information processing device according to claim 1, further comprising:
acquisition means for acquiring an activation condition for the program registered, by the program registration means, in the management file,
determination means for determining whether or not the activation condition, acquired by the acquisition means, for the program is met, and
activation means for activating the program based on determination made by the determination means.

3. The information processing device according to claim 2, **characterized in that** the activation condition for the program is inputting of an instruction to start processing the content, ending of the processing of the content, or meeting, during the processing of the content, of a preset prescribed condition.

4. The information processing device according to claim 2, **characterized in that**:
the determination means includes a reproduction start determination means which determines whether or not starting reproduction of the content has been instructed,
the activation means activates the program when it is determined by the reproduction start determination means that starting reproduction of the content has been instructed, and
the program activated by the activation means starts reproducing the content from a position where reproduction previously ended.

5. The information processing device according to claim 2, **characterized in that**:
the determination means includes a reproduction end determination means which determines whether or not the reproduction of the content has ended,
the activation means activates the program when it is determined by the reproduction end determination means that the reproduction of the content has ended, and
the program activated by the activation means sets a position where the reproduction of the content has ended.

6. The information processing device according to claim 2, **characterized in that**:
the determination means includes a copying start determination means which determines whether or not copying of the content has been instructed,
the activation means activates the program when it is determined by the copying start determination means that copying of the content has been instructed, and
the program activated by the activation means controls the copying of the content based on copying management information about the content.

7. The information processing device according to claim 2, **characterized in that**:
the determination means includes a recording end determination means which determines whether or not recording of the content has ended,
the activation means activates the program when it is determined by the recording end determination means that the recording of the content has ended, and
the program activated by the activation means registers recording information about the content in a server via a network.

8. The information processing device according to claim 2, **characterized in that**:
the determination means includes a move start determination means which determines whether or not moving of the content has been instructed,
the activation means activates the program when it is determined by the move start determination means that moving of the content has been instructed, and
the program activated by the activation means registers destination information about the content in a server via a network and starts moving the content.

9. The information processing device according to claim 2, **characterized in that**:
the determination means includes a move end determination means which determines whether or not the moving of the content has ended,
the activation means activates the program when it is determined by the move end determination means that the moving of the content has ended, and
the program activated by the activation means deletes move-from location information about the content from a server via a network.

10. The information processing device according to claim 2, **characterized in that**:
the determination means includes a reproduction start determination means which determines whether or not starting reproduction of the content has been instructed,
the activation means activates the program when it is determined by the reproduction start determination means that starting reproduction of the content has been instructed, and
the program activated by the activation means sets an activation condition for another program, which executes prescribed processing while the content is being reproduced, and starts reproducing the content.

11. The information processing device according to claim 10, **characterized in that**:
the determination means includes an activation condition determination means which determines whether or not the activation condition for the another program has been met,
the activation means also activates the another program when, while the content is being reproduced, it is determined that the activation condition for the another program has been met, and
the another program activated by the activation means controls the reproduction of the content.

12. An information processing method, comprising:
a generation step of generating a management file for managing content recorded on a recording medium, and
a program registration step of registering a program, which controls prescribed processing of the content, in the management file generated by the generation step.

13. A program recording medium on which a computer-readable program is recorded, the program comprising:
a generation step of generating a management file for managing content recorded on a recording medium, and
a program registration step of registering, in the management file generated by the generation step, a program which controls prescribed processing of the content.

14. A program, comprising:
a generation step of generating a management file which controls content recorded on a recording medium, and
a program registration step of registering a program, which controls prescribed processing of the content, in the management file generated by the generation step.

15. An information processing device, comprising:
generation means for generating a management file which manages content recorded on a recording medium,
program registration means for registering a program which controls prescribed processing of the content, and
location information registration means for registering, in the management file generated by the generation means, location information indicating where the program registered by the program registration means is located.

16. The information processing device according to claim 15, further comprising:
acquisition means for acquiring, based on the location information, an activation condition for the program registered by the program registration means,
determination means for determining whether or not the activation condition for the program acquired by the acquisition means has been met, and
activation means for activating the program based on determination made by the determination means.

17. The information processing device according to claim 16, **characterized in that** the activation condition for the program is inputting of an instruction to start processing the content, ending of the processing of the content, or meeting, during the processing of the content, of a preset prescribed condition.

18. The information processing device according to claim 16, **characterized in that**:
the determination means includes a reproduction start determination means which determines whether or not starting reproduction of the content has been instructed,
the activation means activates the program when it is determined by the reproduction start determination means that starting reproduction of the content has been instructed, and
the program activated by the activation means starts reproducing the content from a position where reproduction previously ended.

19. The information processing device according to claim 16, **characterized in that**:
the determination means includes a reproduction end determination means which determines whether or not reproduction of the content has ended,
the activation means activates the program when it is determined by the reproduction end determination means that the reproduction of the content has ended, and
the program activated by the activation means sets a position where the reproduction of the content has ended.

20. The information processing device according to claim 16, **characterized in that**:
the determination means includes a copying start determination means which determines whether or not copying of the content has been instructed,
the activation means activates the program when it is determined by the copying start determination means that copying of the content has been instructed, and
the program activated by the activation means controls the copying of the content based on copying management information about the content.

21. The information processing device according to claim 16, **characterized in that**:
the determination means includes a recording end determination means which determines whether or not recording of the content has ended,
the activation means activates the program when it is determined by the recording end determination means that the recording of the content has ended, and
the program activated by the activation means registers recording information about the content in a server via a network.

22. The information processing device according to claim 16, **characterized in that**:
the determination means includes a move start determination means which determines whether or not moving of the content has been instructed,
the activation means activates the program when it is determined by the move start determination means that moving of the content has been instructed, and
the program activated by the activation means registers destination information about the content in a server via a network and starts moving the content.

23. The information processing device according to claim 16, **characterized in that**:
the determination means includes a move end determination means which determines whether or not moving of the content has ended,
the activation means activates the program when it is determined by the move end determination means that the moving of the content has ended, and
the program activated by the activation means deletes move-from location information about the content from a server via a network.

24. The information processing device according to claim 16, **characterized in that**:
the determination means includes a reproduction start determination means which determines whether or not starting reproduction of the content has been instructed,
the activation means activates the program when it is determined by the reproduction start determination means that starting reproduction of the content has been instructed, and
the program activated by the activation means sets an activation condition for another program, which executes prescribed processing while the content is being reproduced, and starts reproducing the content.

25. The information processing device according to claim 24, **characterized in that**:
the determination means includes an activation condition determination means which determines whether or not the activation condition for the another program has been met,
the activation means also activates the another program when, while the content is being reproduced, the activation condition for the another program is met, and
the another program activated by the activation means controls the reproduction of the content.

26. An information processing method, comprising:
a generation step of generating a management file for managing content recorded on a recording medium,
a program registration step of registering a program which controls prescribed processing of the content, and
a location information registration step of registering location information, which indicates where the program registered by the program registration step is located, in the management file generated by the generation step.

27. A program recording medium on which a computer-readable program is recorded, the program comprising:
a generation step of generating a management file for managing content recorded on a recording medium,
a program registration step of registering a program which controls prescribed processing of the content, and
a location information registration step of registering, in the management file generated by the generation step, location information which indicates where the program registered by the program registration step is located.

28. A program, comprising:
a generation step of generating a management file which controls content recorded on a recording medium,
a program registration step of registering a program which controls prescribed processing of the content, and
a location information registration step of registering, in the management file generated by the generation step, location information which indicates where the program registered by the program registration step is located.

29. An imaging device, comprising:
imaging means for taking an image of an object,
recording means for recording image data of the object, an image of which has been taken by the imaging means, as content on a recording medium,
generation means for generating a management file which manages the content recorded by the recording means, and
program registration means for registering a program, which controls prescribed processing of the content, in the management file generated by the generation means.

30. An imaging device, comprising:
imaging means for taking an image of an object,
recording means for recording image data of the object, an image of which has been taken by the imaging means, as content on a recording medium,
generation means for generating a management file which manages the content recorded by the recording means,
program registration means for registering a program which controls prescribed processing of the content, and
location information registration means for registering, in the management file generated by the generation means, location information which indicates where the program registered by the program registration means is located.
